(19) Europäisches Patentamt
European Patent Office
Office européen des brevets

(11) **EP 3 793 303 A1**

(12) **EUROPEAN PATENT APPLICATION**
published in accordance with Art. 153(4) EPC

(43) Date of publication:
**17.03.2021 Bulletin 2021/11**

(51) Int Cl.:
*H04W 72/12* (2009.01)   *H04W 72/04* (2009.01)
*H04L 5/00* (2006.01)

(21) Application number: **19800581.1**

(22) Date of filing: **13.05.2019**

(86) International application number:
**PCT/KR2019/005756**

(87) International publication number:
**WO 2019/216740 (14.11.2019 Gazette 2019/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2018 US 201862670544 P**

(71) Applicant: **LG Electronics Inc.**
**Yeongdeungpo-gu**
**Seoul 07336 (KR)**

(72) Inventors:
• **BAE, Duckhyun**
  **Seoul 06772 (KR)**
• **YI, Yunjung**
  **Seoul 06772 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **METHOD FOR TRANSMITTING AND RECEIVING UPLINK CONTROL INFORMATION IN WIRELESS COMMUNICATION SYSTEM AND APPARATUS THEREFOR**

(57)   The present disclosure provides a method for transmitting, by a user equipment (UE), uplink control information (UCI) in a wireless communication system.

More particularly, a radio resource control (RRC) configuration is received from a base station; and at least one uplink control information among a plurality of uplink control information is multiplexed through a specific resource among a plurality of resources allocated for transmission of control information or data and transmitted to the base station to satisfy strict latency and reliability requirements required in an Ultra-Reliable and Low Latency Communication (URLLC) service.

[FIG. 8]

**Description**

[Technical Field]

The present disclosure generally relates to the radio communication system, and more particularly, the method of selective transmission of upward link control information and the devices supporting it.

[Background Art]

Mobile communication systems have been developed to provide a voice service while ensuring activity and mobility of users. However, mobile communication systems have been extended to provide not only voice service but also data service, resulting in explosive increase in traffic and shortage of resources. To meet the demands of users expecting higher speed service, more advanced mobile communication systems are required.
Requirements of a next-generation mobile communication system should be able to support increased data traffic, a dramatic increase in per-user data rate, acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

[Disclosure]

[Technical Problem]

This specification provides a method of transmitting and receiving uplink control information (UCI) in a wireless communication system.
Furthermore, this specification provides a method of efficient transmission over transmission resources in preference to other upward link control information by multiplexing the upward link control information selected according to priority with a number of other user data.
Technical objects to be achieved in the present invention are not limited to the above-described technical objects, and other technical objects not described above may be evidently understood by a person having ordinary skill in the art to which the present invention pertains from the following description.

[Technical Solution]

This disclosure provides method of transmitting uplink control information, UCI, by the user equipment, UE, in wireless system.
Specifically, A method for transmitting, by a user equipment (UE), uplink control information (UCI) in a wireless communication system includes receiving a radio resource control (RRC) configuration from a base station; and multiplexing at least one uplink control information among a plurality of uplink control information through a specific resource among a plurality of resources allocated for transmission of control information or data and transmitting the multiplexed uplink control information to the base station, wherein the specific resource is a resource allocated for transmission control information or data related to a service requiring a low latency.
Furthermore, in this specification, the at least one uplink control information is control information related to services having different requirements, respectively and different resources are allocated to the uplink control information, respectively.
Furthermore, in this specification, at least one of locations on a time axis and locations on a frequency axis of the different resources is partially or entirely overlapped.
Furthermore, in this specification, the radio resource control configuration is configuration information related to the service requiring the low latency, and wherein the at least one uplink control information is multiplexed based on parameters included in the radio resource control configuration.
Furthermore, in this specification, the at least one control information is selected according to a priority of the plurality of uplink control information.
Furthermore, in this specification, the priority is determined according to requirements of the respective services related to the plurality of uplink control information except for channel status information (CSI).
Furthermore, in this specification, the plurality of uplink control information includes a Hybrid Automatic Repeat and reQuest Acknowledgement (HARQ-ACK) and a scheduling request (RS) for each of the services, and the HARQ-ACK for each service has a higher priority than the scheduling request for the same service.
Furthermore, in this specification, among the plurality of uplink control information, the remaining uplink control information other than the at least one uplink control information is dropped.

Furthermore, in this specification, the at least one uplink control information among the plurality of uplink control information is the control information related to the service requiring the low latency, multiplexing the remaining uplink control information other than the at least one uplink control information among the plurality of uplink control information through other resources allocated for services related to the remaining uplink control information, respectively and transmitting the multiplexed uplink control information to the base station.

Furthermore, in this specification, the plurality of resources are plurality of physical uplink control channels (PUCCHs) for transmission of the control information, and wherein the specific resource is a PUCCH having a shortest length among the plurality of physical uplink control channels (PUCCHs).

This disclosure provides method of receiving uplink control information, UCI, by the base station, in wireless system.

Specifically, in this specification, method for receiving, by a base station, uplink control information (UCI) in a wireless communication system includes transmitting a radio resource control (RRC) configuration to a UE; and receiving, from the UE, at least one uplink control information among a plurality of uplink control information multiplexed through a specific resource among a plurality of resources allocated to the UE for transmission of control information or data, wherein the specific resource is a resource allocated for transmission control information or data related to a service requiring a low latency.

This disclosure provides an user equipment, UE, transmitting uplink control information, UCI, in wireless system.

Specifically, in this specification, UE transmitting uplink control information (UCI) to a base station in a wireless communication system inlcudes a transceiver receiving a radio resource control (RRC) configuration from the base station; and a processor controlling the transceiver to multiplex at least one uplink control information among a plurality of uplink control information through a specific resource among a plurality of resources allocated for transmission of control information or data and transmit the multiplexed uplink control information to the base station,

wherein the specific resource is a resource allocated for transmission control information or data related to a service requiring a low latency.

Furthermore, in this specification, the at least one uplink control information is control information related to services having different requirements, respectively and different resources are allocated to the uplink control information, respectively.

Furthermore, in this specification, at least one of locations on a time axis and locations on a frequency axis of the different resources is partially or entirely overlapped.

Furthermore, in this specification, the radio resource control configuration is configuration information related to the service requiring the low latency, and wherein the processor multiplexes the at least one uplink control information based on parameters included in the radio resource control configuration.

Furthermore, in this specification, the processor selects the at least one control information according to a priority of the plurality of uplink control information.

Furthermore, in this specification, the processor determines the priority according to requirements of the respective services related to the plurality of uplink control information except for channel status information (CSI).

Furthermore, in this specification, the plurality of uplink control information includes a Hybrid Automatic Repeat and reQuest Acknowledgement (HARQ-ACK) and a scheduling request (RS), and wherein the HARQ-ACK for each service has a higher priority than the scheduling request for the same service.

Furthermore, in this specification, the processor drops the remaining uplink control information other than the at least one uplink control information among the plurality of uplink control information.

Furthermore, in this specification, the at least one uplink control information among the plurality of uplink control information is the control information related to the service requiring the low latency, and the processor multiplexes the remaining uplink control information other than the at least one uplink control information among the plurality of uplink control information through other resources allocated for services related to the remaining uplink control information, respectively and transmits the multiplexed uplink control information to the base station.

[Advantageous Effects]

This specification has the effect of efficiently multiplying and transmitting upward link control information based on priorities between services, priorities between upward link control information, and priorities among transmission resources, thereby meeting the stringent late-time and reliability requirements required by the Ultra-Reliable and Low Latency Communication (RLLC) service.

Furthermore, this specification has the effect of providing a preferred method of transmitting higher priority uplink control information (UCI) over other uplink control information (UCI) within the same service, providing the environment for transmission of the low traffic size, low arrival rate, low delay requirements, short transmission duration and urgent service/message required by the system.

Effects which may be obtained in the present invention are not limited to the above-described effects, and other technical effects not described above may be evidently understood by a person having ordinary skill in the art to which the present invention pertains from the following description.

[Description of Drawings]

The accompany drawings, which are included as part of the detailed description in order to help understanding of the present invention, provide embodiments of the present invention and describe the technical characteristics of the present invention along with the detailed description.

FIG. 1 is a diagram showing an example of an AI device to which implementations of this disclosure may be applied.
FIG. 2 is a diagram showing an example of an AI server to which implementations of this disclosure may be applied.
FIG. 3 is a diagram showing an example of a general system configuration of NR to which implementations of this disclosure may be applied.
FIG. 4 shows an example of a relation between an uplink frame and a downlink frame in a wireless communication system to which implementations of this disclosure may be applied.
FIG. 5 is a diagram illustrating an example of a block diagram of a transmitter and a receiver for hybrid beamforming.
FIG. 6 is a flowchart illustrating an example of a pre-emption indication related operation.
FIG. 7 is a diagram illustrating an example of a pre-emption indication method.
FIG. 8 is a flowchart illustrating a method in which a UE of a wireless communication system multiplexes and transmits at least one uplink control information on a physical uplink channel according to a priority according to an embodiment of the present disclosure.
FIG. 9 is a flowchart illustrating a method for configuring a priority according to another embodiment of the present disclosure.
FIG. 10 is a flowchart illustrating a method for configuring a priority according to yet another embodiment of the present disclosure.
FIG. 11 is a flowchart illustrating a method for configuring a priority according to still yet another embodiment of the present disclosure.
FIG. 12 is a flowchart illustrating a method for configuring a priority according to still yet another embodiment of the present disclosure.
FIG. 13 is a flowchart illustrating a method for configuring a priority according to still yet another embodiment of the present disclosure.
FIG. 14 is a flowchart illustrating a method for receiving, by a gNB, uplink control information from a UE in a wireless communication system according to an embodiment of the present disclosure.
FIG. 15 is a diagram showing an example of a self-contained slot structure to which implementations of this disclosure may be applied.
FIG. 16 is a flowchart showing an example of a terminal transmitting the uplink, which is described in this disclosure.
FIG. 17 illustrates an artificial intelligence (AI) device 1700 according to an embodiment of the present disclosure.
FIG. 18 illustrates an AI server 1800 according to an embodiment of the present disclosure.
FIG. 19 illustrates an AI system 1 according to an embodiment of the present disclosure.

[Best Modes]

## Overview of this disclosure

Reference will now be made in detail to implementations of the disclosure, examples of which are illustrated in the accompanying drawings. A detailed description to be disclosed below together with the accompanying drawing is to describe exemplary implementations of the present disclosure and not to describe a unique implementation for carrying out the present disclosure. The detailed description below includes details to provide a complete understanding of the present disclosure. However, those skilled in the art know that the present disclosure can be carried out without the details.

In some cases, in order to prevent a concept of the present disclosure from being ambiguous, known structures and devices may be omitted or illustrated in a block diagram format based on core functions of each structure and device.

In the present disclosure, a base station (BS) means a terminal node of a network directly performing communication with a terminal. In the present disclosure, specific operations described to be performed by the base station may be performed by an upper node of the base station, if necessary or desired. That is, it is obvious that in the network consisting of multiple network nodes including the base station, various operations performed for communication with the terminal can be performed by the base station or network nodes other than the base station. The 'base station (BS)' may be replaced with terms such as a fixed station, Node B, evolved-NodeB (eNB), a base transceiver system (BTS), an access point (AP), gNB (general NB), and the like. Further, a 'terminal' may be fixed or movable and may be replaced with terms such as user equipment (UE), a mobile station (MS), a user terminal (UT), a mobile subscriber station (MSS), a subscriber station (SS), an advanced mobile station (AMS), a wireless terminal (WT), a machinetype communication (MTC) device, a machine-to-machine (M2M) device, a device-todevice (D2D) device, and the like.

In the present disclosure, downlink (DL) means communication from the base station to the terminal, and uplink (UL) means communication from the terminal to the base station. In the downlink, a transmitter may be a part of the base station, and a receiver may be a part of the terminal. In the uplink, the transmitter may be a part of the terminal, and the receiver may be a part of the base station.

Specific terms used in the following description are provided to help the understanding of the present disclosure, and may be changed to other forms within the scope without radio service (GPRS)/enhanced data rates for GSM evolution (EDGE).

The OFDMA may be implemented as radio technology such as IEEE 802.11(Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using EUTRA, adopts the OFDMA in the downlink and the SC-FDMA in the uplink. LTE-A (advanced) is the evolution of 3GPP LTE.

Further, 5G new radio (NR) defines enhanced mobile broadband (eMBB), massive machine type communications (mMTC), ultra-reliable and low latency communications (URLLC), and vehicle-to-everything (V2X) based on usage scenario.

A 5G NR standard is divided into standalone (SA) and non-standalone (NSA) depending on co-existence between a NR system and a LTE system.

The 5G NR supports various subcarrier spacings and supports CP-OFDM in the downlink and CP-OFDM and DFT-s-OFDM (SC-OFDM) in the uplink.

Implementations of the present disclosure can be supported by standard documents disclosed in at least one of IEEE 802, 3GPP, and 3GPP2 which are the wireless access systems. That is, steps or parts in implementations of the present disclosure which are not described to clearly show the technical spirit of the present disclosure can be described by the standard document.

3GPP LTE/LTE-A/New RAT (NR) is primarily described for clear description, but technical features of the present disclosure are not limited thereto.

In the present disclosure, 'A and/or B' may be interpreted in the same sense as 'including at least one of A or B'.

## Description of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behaviour.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

Numerology: The numerology corresponds to one subcarrier spacing in a frequency domain. By scaling a reference subcarrier spacing by an integer N, different numerologies can be defined.

NR: NR radio access or new radio.

## General system

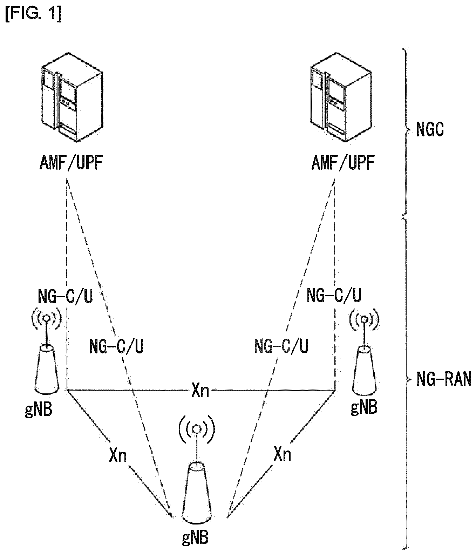

FIG. 1 illustrates an example of an overall structure of a NR system to which a method described by the present disclosure is applicable.

Referring to FIG. 1, an NG-RAN is composed of gNBs that provide an NG-RA user plane (new AS sublayer/PDCP/RLC/MAC/PHY) and a control plane (RRC) protocol terminal for a UE (User Equipment).

The gNBs are connected to each other via an Xn interface.

The gNBs are also connected to an NGC via an NG interface.

More specifically, the gNBs are connected to an access and mobility management function (AMF) via an N2 interface and a User Plane Function (UPF) via an N3 interface.

On the other hand, as more communication devices demand greater communication capacity, there is a need for improved mobile broadband communication compared to traditional radio access technology.

Massive MTC (Machine Type Communications), which connects a number of devices and objects and provides a variety of services anytime, anywhere, is also one of the major issues to be considered in next-generation communications.

In addition, the design of communication systems taking into account reliability and latency-sensitive services/UE is being discussed.

As such, the introduction of next-generation radio access technology is discussed considering advanced mobile roadband communication (eMBB), massive MTC (mMTC), and URLLC (Ultra-Reliable and Low Latency Communication).

In this invention, for convenience, the technology is called the New RAT.

### New Rat (NR) numerology and frame structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max}, N_f/100) \cdot T_s = 10$ms. The radio frame is composed of ten subframes each having a section of $T_{sf} = (\Delta f_{max} N_f/1000) \cdot T_s = 1$ms. In this case, there may be a set of UL frames and a set of DL frames.

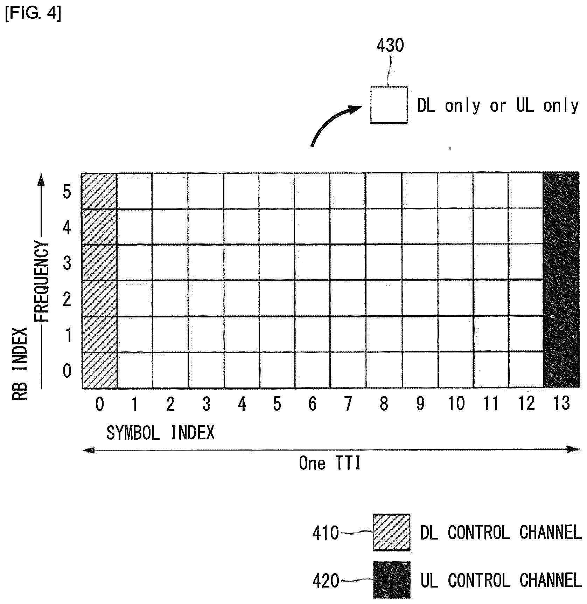

FIG. 4 illustrates an example of a relation between an uplink frame and a downlink frame in a wireless communication system to which an implementation described by the present disclosure is applicable.

As illustrated in FIG. 4, a UL frame number I from a User Equipment (UE) needs to be transmitted $T_{TA} = N_{TA} T_s$ before the start of a corresponding DL frame in the UE.

Regarding the numerology $\mu$, slots are numbered in ascending order of $n_s^{\mu} \in \{0,..., N_{subframe}^{slots, \mu} - 1\}$ in a subframe, and in ascending order of $n_{s,f}^{\mu} \in \{0,..., N_{frame}^{slots, \mu} - 1\}$ in a radio frame. One slot is composed of continuous OFDM symbols of $N_{symb}^{\mu}$, and $N_{symb}^{\mu}$ is determined depending on a numerology in use and slot configuration. The start of slots $n_s^{\mu}$ in a subframe is temporally aligned with the start of OFDM symbols $n_s^{\mu} N_{symb}^{\mu}$ in the same subframe.

Not all UEs are able to transmit and receive at the same time, and this means that not all OFDM symbols in a DL slot or an UL slot are available to be used.

Table 2 shows the number of OFDM symbols per slot for a normal CP in the numerology $\mu$, and Table 3 shows the number of OFDM symbols per slot for an extended CP in the numerology $\mu$.

[Table 2]

| $\mu$ | Slot configuration | | | | | |
|---|---|---|---|---|---|---|
| | 0 | | | | | |
| | $N_{\text{symb}}^{\mu}$ | $N_{\text{frame}}^{\text{slots},\mu}$ $N_{\text{subframe}}^{\text{slots},\mu}$ | | $N_{\text{symb}}^{\mu}$ | $N_{\text{frame}}^{\text{slots},\mu}$ | $N_{\text{subframe}}^{\text{slots},\mu}$ |
| 0 | 14 | 10 | 1 | 7 | 20 | 2 |
| 1 | 14 | 20 | 2 | 7 | 40 | 4 |
| 2 | 14 | 40 | 4 | 7 | 80 | 8 |
| 3 | 14 | 80 | 8 | - | - | - |
| 4 | 14 | 160 | 16 | - | - | - |
| 5 | 14 | 320 | 32 | - | - | - |

[Table 3]

| $\mu$ | Slot configuration | | | | | |
|---|---|---|---|---|---|---|
| | 0 | | | 1 | | |
| | $N_{\text{symb}}^{\mu}$ | $N_{\text{frame}}^{\text{slots},\mu}$ | $N_{\text{subframe}}^{\text{slots},\mu}$ | $N_{\text{symb}}^{\mu}$ | $N_{\text{frame}}^{\text{slots},\mu}$ | $N_{\text{subframe}}^{\text{slots},\mu}$ |
| 0 | 12 | 10 | 1 | 6 | 20 | 2 |
| 1 | 12 | 20 | 2 | 6 | 40 | 4 |
| 2 | 12 | 40 | 4 | 6 | 80 | 8 |
| 3 | 12 | 80 | 8 | - | - | - |
| 4 | 12 | 160 | 16 | - | - | - |
| 5 | 12 | 320 | 32 | - | - | - |

**NR Physical Resource**

Regarding physical resources in the NR system, an antenna port, a resource grid, a resource element, a resource block, a carrier part, etc. may be considered.

Hereinafter, the above physical resources possible to be considered in the NR system will be described in more detail.

First, regarding an antenna port, the antenna port is defined such that a channel over which a symbol on one antenna port is transmitted can be inferred from another channel over which a symbol on the same antenna port is transmitted. When large-scale properties of a channel received over which a symbol on one antenna port can be inferred from another channel over which a symbol on another antenna port is transmitted, the two antenna ports may be in a QC/QCL (quasi co-located or quasi co-location) relationship. Herein, the large-scale properties may include at least one of delay spread, Doppler spread, Doppler shift, average gain, and average delay.

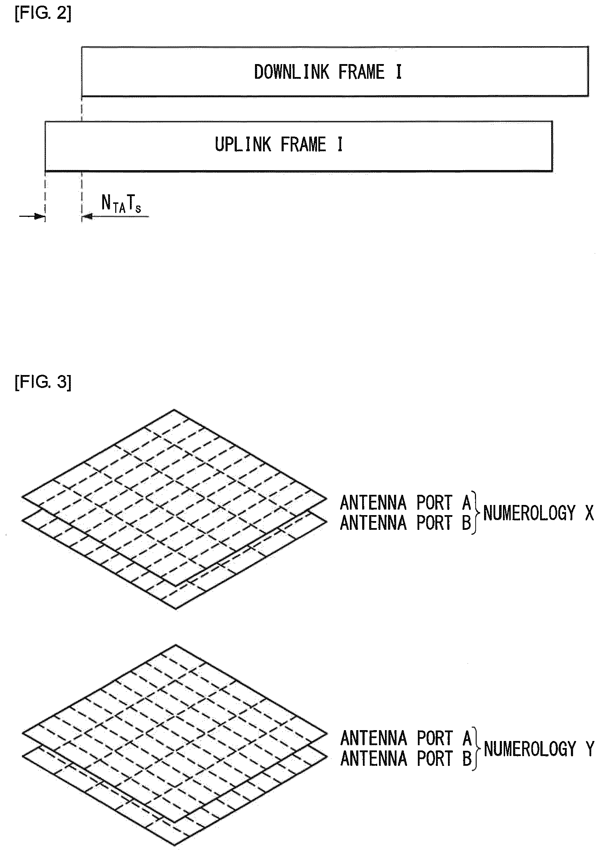

FIG. 3 illustrates an example of a resource grid supported in a wireless communication system to which an implementation described by the present disclosure is applicable.

Each element of the resource grid for the numerology $\mu$ and the antenna port p is indicated as a resource element, and may be uniquely identified by an index pair $(k,\bar{l})$. Herein, $k = 0,...,N_{RB}^{\mu}N_{sc}^{RB}-1$ is an index in the

frequency domain, and $\bar{l} = 0,...,2^{\mu}N_{symb}^{(\mu)}-1$ indicates a location of a symbol in a subframe. To indicate a resource element in a slot, the index pair $(k,\bar{l})$ is used, wher $l = 0,...,N_{symb}^{\mu}-1$ .

The resource element $(k,\bar{l})$ for the numerology $\mu$ and the antenna port p corresponds to a complex value $a_{k,\bar{l}}^{(p,\mu)}$ . When there is no risk of confusion or when a specific antenna port or numerology is specified, the indexes p

and $\mu$ may be dropped and thereby the complex value may become $a_{k,\bar{l}}^{(p)}$ or $a_{k,\bar{l}}$.

In addition, a physical resource block is defined as $N_{sc}^{RB} = 12$ continuous subcarriers in the frequency domain.

In the frequency domain, physical resource blocks may be numbered from 0 to $N_{RB}^{\mu}-1$ . At this point, a relationship between the physical resource block number $n_{PRB}$ and the resource elements $(k,l)$ may be given as in Equation 1.

$$【Equation 1】$$

$$n_{PRB} = \left\lfloor \frac{k}{N_{sc}^{RB}} \right\rfloor$$

In addition, regarding a carrier part, a UE may be configured to receive or transmit the carrier part using only a subset of a resource grid. At this point, a set of resource blocks which the UE is configured to receive or transmit are numbered from 0 to $N_{URB}^{\mu}-1$ in the frequency region.

### Self-contained slot structure

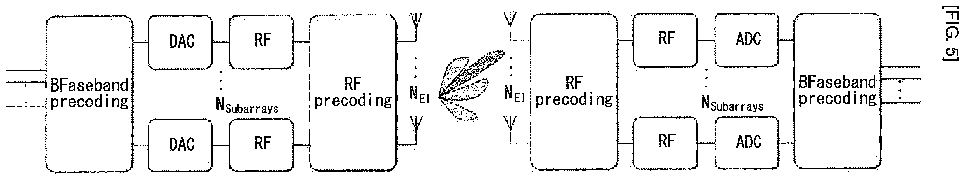

To minimize latency of data transmission in a TDD system, 5G new RAT (NR) has considered a self-contained slot structure illustrated in FIG. 5.

That is, FIG. 4 illustrates an example of a self-contained slot structure to which an implementation described by the present disclosure is applicable.

In FIG. 4, a hatched portion 810 denotes a downlink control region, and a black portion 820 denotes an uplink control region.

A non-marked portion 830 may be used for downlink data transmission or uplink data transmission.

Such a structure may be characterized in that DL transmission and UL transmission are sequentially performed in one slot, DL data is sent in one slot, and UL Ack/Nack is also transmitted and received in one slot.

Such a slot may be defined as a 'self-contained slot'.

That is, through the slot structure, the base station reduces the time it takes to retransmit data to the UE when a data transmission error occurs, and thus can minimize latency of final data delivery.

In the self-contained slot structure, the base station and the UE require a time gap in a process for switching from a transmission mode to a reception mode or a process for switching from the reception mode to the transmission mode.

To this end, in the corresponding slot structure, some OFDM symbols at time of switching from DL to UL are configured as a guard period (GP).

### Carrier Aggregation

A communication environment considered in embodiments of the present disclosure includes all multi-carrier support environments. That is, a multi-carrier system or carrier aggregation (CA) system used in the present disclosure is a system in which, when a target wide band is configured, one or more component carriers (CCs) having a bandwidth smaller than a target bandwidth are aggregated and used in order to support a wide band.

In the present disclosure, multi-carriers refer to aggregation (or carrier aggregation) of carriers and in this case, the aggregation of the carriers refers to both aggregation of contiguous carriers and aggregation of non-contiguous carriers. Further, the number of components carriers aggregated between the downlink and the uplink may be set differently. A case where the number of downlink component carriers (hereinafter, referred to as 'DL CC') is equal to the number of uplink component carriers (hereinafter, referred to as 'UL CC') is referred to as symmetric aggregation and a case where the number of downlink CCs is different from the number of uplink CCs is referred to as asymmetric aggregation. Such carrier aggregation may be used interchangeably with terms such as carrier aggregation, bandwidth aggregation, spectrum aggregation, and the like.

Carrier aggregation configured by combining two or more component carriers aims at supporting up to 100 MHz bandwidth in the LTE-A system. When one or more carriers having a bandwidth smaller than the target bandwidth are combined, the bandwidth of the combined carriers may be limited to the bandwidth used in the existing system in order to maintain backward compatibility with the existing IMT system. For example, in the existing 3GPP LTE system, {1.4, 3, 5, 10, 15, 20} MHz bandwidth is supported and in 3GPP LTE-advanced system (that is, LTE-A), a bandwidth larger than 20 MHz may be supported by using only the bandwidths for compatibility with the existing system. Further, the carrier aggregation system used in the present disclosure may support the carrier aggregation by defining a new bandwidth regardless of the bandwidth used in the existing system.

The LTE-A system uses a concept of a cell to manage radio resources.

The aforementioned carrier aggregation environment may be referred to as a multiple-cell environment. The cell is defined as a combination of a pair of a downlink resource (DL CC) and an uplink resource (UL CC), but the uplink resource is not required. Accordingly, the cell may be constituted by the downlink resource along or by the downlink resource and the uplink resource. When a specific UE has only one configured serving cell, the specific user equipment may have one DL CC and one UL CC, but when the specific user equipment has two or more configured serving cells, the specific user equipment may have DL CCs as many as the cells and the number of UL CCs may be equal to or smaller therethan.

Alternatively, on the contrary, the DL CC and the UL CC may be configured. That is, when the specific user equipment has multiple configured serving cells, a carrier aggregation environment in which the number of UL CCs is larger than the number of DL CCs may also be supported. That is, the carrier aggregation may be appreciated as aggregation of two or more different cells having carrier frequencies (center frequency of the cell), respectively. Here, the term 'cell' needs to be distinguished from a 'cell' as an area covered by the eNB which is generally used.

The cell used in the LTE-A system includes a primary cell (PCell) and a secondary cell (SCell). The P cell and the S cell may be used as the serving cell. In the case of a user equipment which is in an RRC_CONNECTED state, but does not configure the carrier aggregation or does not support the carrier aggregation, only one serving cell configured only by the P cell exists. On the contrary, in the case of a user equipment which is in the RRC_CONNECTED state and configures the carrier aggregation, one or more serving cells may exist and the entire serving cell includes the P cell and one or more S cells.

The serving cell (P cell and S cell) may be configured through an RRC parameter. PhysCellId has integer values of 0 to 503 as a physical layer identifier of the cell. SCellIndex has integer values of 1 to 7 as a short identifier used for identifying the S cell. ServCellIndex has integer values of 0 to 7 as a short identifier used for identifying the serving cell (P cell or S cell). The 0 value is applied to the P cell and SCellIndex is previously granted to be applied to the S cell. That is, a cell having the smallest cell ID (or cell index) in ServCellIndex becomes the P cell.

The P cell refers to a cell operating on a primary frequency (or primary CC). The UE may be used to perform an initial connection establishment process or a connection re-establishment process and may refer to a cell indicated during a handover process. Further, the P cell refers to a cell which becomes a center of control related communication among the serving cells configured in the carrier aggregation environment. That is, the user equipment may be allocated the PUCCH only in the P cell thereof and may transmit the allocated PUCCH and may use only the P cell for acquiring system information or changing a monitoring procedure. Evolved Universal Terrestrial Radio Access (E-UTRAN) may change only the P cell for the handover procedure by using an RRC connection reconfiguration message of a higher layer, which includes mobility control information to the user equipment that supports the carrier aggregation environment.

The S cell refers to a cell operating on a second frequency (or secondary CC). Only one P cell may be allocated to the specific user equipment and one or more S cells may be allocated to the specific user equipment. The S cell may be configured after the RRC connection is configured and may be used to provide an additional radio resource. The PUCCH does not exist in remaining cells other than the P cell among the serving cells configured in the carrier aggregation environment, that is, the S cell. When the E-UTRAN adds the S cell to the user equipment supporting the carrier aggregation environment, the E-UTRAN may provide all the system information related to the operation of a related cell which is in the RRC_CONNECTED state through a dedicated signal. The change of the system information may be controlled by releasing and adding the related S cell and the RR connection reconfiguration message of the higher layer may be used at this time. The E-UTRAN may perform dedicated signaling with different parameters for each user equipment rather than broadcasting within the related S cell.

After an initial security activation process starts, the E-UTRAN may configure a network including one or more S cells in addition to the P cell initially configured in the connection configuration process. In the carrier aggregation environment, the P cell and the S cell may operate as respective component carriers. In the following embodiments, the primary component carrier (PCC) may be used in the same meaning as the P cell and the secondary component carrier (SCC) may be used in the same meaning as the S cell.

In the existing system, when scheduling is performed in a higher layer, a predetermined operation is performed in a lower layer regardless of the priority between traffic. Such an operation is generally performed differently depending on the type of scheduling or a type (e.g., control information or user information) of transferred data.

In the wireless communication system described in the present disclosure, a UE may perform a different operation according to a characteristic of a service used by the UE in spite of the same data type and the same scheduling type. For example, when the UE uses both URLLC and eMBB services, the UE may prioritize the URLLC over the eMBB.

Accordingly, in the existing system, HARQ ACK transmission has priority over other UCI or user data transmission, but in the next system, even HARQ ACK transmission may be omitted due to transmission of user data of another high-priority service.

In the present disclosure, a method for configuring a priority between uplink transmission channels and a priority between uplink control information by the UE in a case where the UE uses both the URLLC service and the eMBB service and in a case where the UE uses only the URLLC service will be described.

**enhanced Mobile Broadband communication (eMBB)**

In the case of the NR system, a massive MIMO environment in which the number of transmission/reception antennas greatly increases may be considered. That is, as a large MIMO environment is considered, the number of the transmission/reception antennas may increase to several tens or several hundreds. A hybrid type beamforming technique in which an analog beamforming technique and a digital beamforming technique are combined is required according to a position to which a beamforming weight vector/precoding vector is applied in order to reduce complexity of hardware implementation in the large MIMO environment and for an increase in performance using multiple antennas, flexibility of resource allocation, and ease of beam control for each frequency.

**Hybrid Beamforming**

FIG. 5 is a diagram illustrating an example of a block diagram of a transmitter and a receiver for hybrid beamforming.

As illustrated in FIG. 5, when a transmission path is used, there may be a phase shift applied directly to the RF domain in each element of the sub-array, but a digital beamforming technique based on a complex weight vector may be applied to a signal supplied to each sub-array. Digital beamforming allows signal control over both amplitude and phase of the aggregated signal at the sub-array level. However, due to cost and complexity, RF control is generally limited to applying a phase shift to each element. The hybrid beamforming architecture partitions the digital and RF domains. Several array elements are combined into sub-array modules. Each element in the sub-array has a phase shift applied directly to the RF domain, and the digital beamforming technique is applied to the signal supplying each sub-array.

**Ultra-Reliable and Low Latency Communication (URLLC)**

URLLC transmission defined in the NR may mean (1) a relatively low traffic size, (2) a relatively low arrival rate, (3) an extremely low latency requirement (e.g., 0.5, 1 ms), (4) a relatively short transmission duration (e.g., 2 OFDM symbols), and (5) transmission for an emergency service/message. Some matters defined in the NR in order to support the URLLC will be described.

**UCI enhancement**

A URLLC service should satisfy a stringent latency and a reliability requirement. That is, in the case of the URLLC, when HARQ-ACK feedback corresponding to a plurality of PDSCHs is defined to configure an HARQ-ACK codebook of a PUCCH to be transmitted to one specific slot, an HARQ-ACK payload size becomes relatively larger and the resulting deterioration of PUCCH transmission performance may be undesirably caused. Moreover, in order to support a latency-critical service, a plurality of PDSCHs having a short duration should be able to be repeatedly transmitted even in the slot.

However, when only up to one HARQ-ACK PUCCH is allowed to be transmitted within a slot even if a plurality of PDSCHs is transmitted by scheduling of the gNB, HARQ-ACK feedback transmission for the back-to-back scheduling may be relatively delayed and thus may not be desirable. Therefore, for more flexible and efficient resource utilization and service support, and for faster and more robust UL channel transmission, a PUCCH (or PUSCH) including a plurality of HARQ-ACKs in a slot should be able to be transmitted.

**Scheduling/HARQ processing timeline**

In general, a PDSCH/PUSCH by a PDCCH received earlier is received/transmitted earlier than a PDSCH/PUSCH by a PDCCH received later. Therefore, in the case of NR, out-of-order PDSCH/PUSCH scheduling is not allowed, and the UE is thus defined not to expect such a situation. In addition, similarly, out-of-order HARQ transmission/feedback is not allowed, and the UE is similarly defined not to expect such a situation.

In the case of a UE having traffic of various requirements (e.g., eMBB, URLLC), an operation in which a packet scheduled later is processed earlier than a packet scheduled earlier needs to be allowed in order to satisfy a more stringent latency requirement for a specific service (e.g., URLLC). Further, an operation in which an HARQ-ACK for the packet scheduled later is transmitted earlier than an HARQ-ACK for the packet scheduled earlier needs to be allowed.

Out-of-order scheduling means that for any two HARQ process IDs A and B for a given cell, if the scheduling DCI scrambled with C-RNTI for unicast PUSCH transmission A comes earlier than the scheduling DCI scrambled with C-RNTI for unicast PUSCH transmission B, the PDSCH/PUSCH for B is transmitted/received earlier than the PDSCH/PUSCH for A.

out-of-order HARQ-ACK means that for any two HARQ process IDs A and B for a given cell, it is expected that the scheduled unicast PDSCH transmission for A will come earlier than the unicast PDSCH transmission for B, whereas the HARQ-ACK for B will be transmitted earlier than the HARQ-ACK for A.

**UL inter-UE Tx prioritization/multiplexing**

In the case of UL, transmission for a specific type of traffic (e.g., URLLC) needs to be multiplexed with another previously scheduled transmission (e.g., eMBB) in order to satisfy a more stringent latency requirement. In this regard, as one method, information that a specific resource will be preempted may be given to the previously scheduled UE, and the corresponding resource may be used for UL transmission by the URLLC UE.

Alternatively, the corresponding traffic is scheduled by overlapping resources to different UEs, but the power of the UE transmitting the traffic corresponding to a more stringent requirement is boosted, thereby guaranteeing transmission reliability for the corresponding traffic.

**Pre-emption indication**

In the NR, dynamic resource sharing between the eMBB and the URLLC is supported. eMBB and URLLC services may be scheduled on non-overlapping time/frequency resources and URLLC transmission may occur in resources scheduled ongoing eMBB traffic. The eMBB UE may not know whether PDSCH transmission of the corresponding UE is partially punctured and the UE may not decode the PDSCH due to corrupted coded bits. To this end, in the NR, pre-emption indication related contents are defined. The pre-emption indication may be referred to as an interrupted transmission indication.

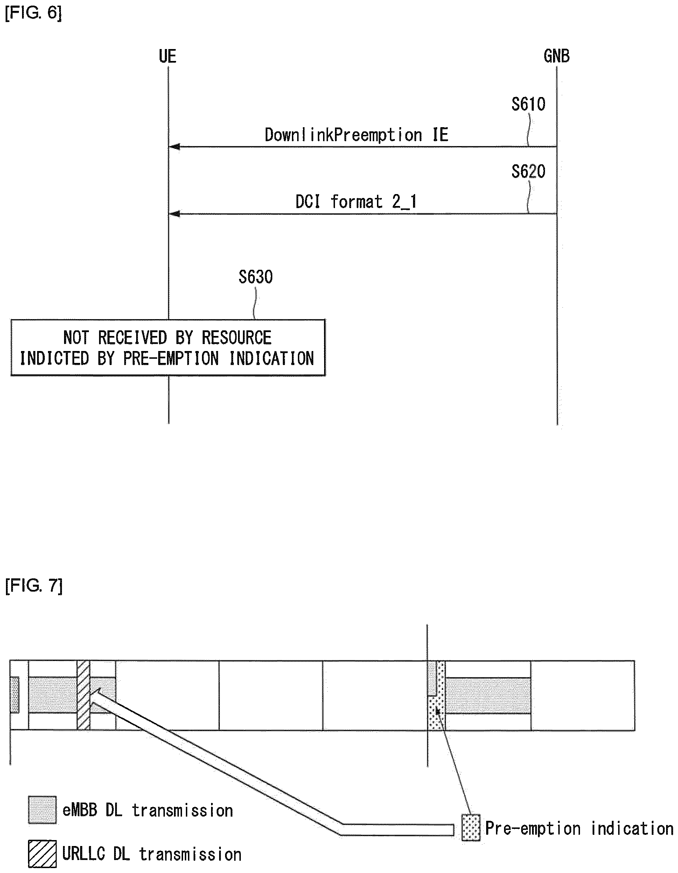

FIG. 6 is a flowchart illustrating an example of a pre-emption indication related operation.

First, the UE receives DownlinkPreemption IE from the gNB (S610).

In addition, the UE receives DCI format 2_1 from the gNB based on the DownlinkPreemption IE (S620).

In addition, the UE does not perform reception of the signal in resources (PRB and OFDM symbol) indicated by the pre-emption indication included in the DCI format 2_1 (or assumes that no transmission is intended) (S630).

FIG. 7 is a diagram illustrating an example of a pre-emption indication method.

A pre-emption indication (or interrupted transmission indication) will be described in more detail.

When the UE receives higher layer parameter DownlinkPreemption, the UE is configured as INT-RNTI provided by higher layer parameter int-RNTI for monitoring PDCCH for carrying the DCI format 2_1. In addition, in the UE, information such as INT-ConfigurationPerServingCell parameter, dci-PayloadSize parameter, and timeFrequencySet parameter is additionally configured by DownlinkPreemption IE.

Table 4 below shows an example of DownlinkPreemption IE.

## [Table 4]

```
-- ASN1START
-- TAG-DOWNLINKPREEMPTION-START

DownlinkPreemption ::=            SEQUENCE {
    int-RNTI                      RNTI-Value,
    timeFrequencySet              ENUMERATED {set0, set1},
    dci-PayloadSize               INTEGER (0..maxINT-DCI-PayloadSize),
    int-ConfigurationPerServingCell   SEQUENCE (SIZE (1..maxNrofServingCells)) OF INT-
ConfigurationPerServingCell,
    ...
}

INT-ConfigurationPerServingCell ::= SEQUENCE {
    servingCellId                 ServCellIndex,
    positionInDCI                 INTEGER (0..maxINT-DCI-PayloadSize-1)
}

-- TAG-DOWNLINKPREEMPTION-STOP
-- ASN1STOP
```

The int-RNTI parameter is RNTI used for the pre-emption indication in DL and a timeFrequencySet parameter is a parameter for selecting a set for a DL-preemption indication.

The parameter is a parameter representing a total length of a DCI payload scrambled to the INT-RNTI and the int-ConfigurationPerServingCell parameter is a parameter indicating positions of 14 bit INT values (for each serving) in the DCI payload.

The positionInDCI parameter is a parameter representing a start position of the 14 bit INT value applicable to the corresponding serving cell (servingCellId) in the DCI payload.

The INT-ConfigurationPerServingCell parameter is a parameter representing a serving cell index set provided by a set corresponding to positions for fields of DCI format 2_1 by corresponding higher layer parameter servingCellId and higher layer parameter positionInDCI.

When the UE detects the DCI format 2_1 for the serving cell from a set of configured serving cells, the UE may assume that there is no transmission to the corresponding UE in PRBs and symbols indicated by the DCI format 2_1 from a PRB set and a symbol set during a last monitoring period.

The DCI format 2_1 is used for notifying PRB(s) and OFDM symbol(s) which the UE assumes not to intend any transmission for the UE and the corresponding PRB and OFDM symbol are indicated by the pre-emption indication.

At least one pre-emption transmitted by the DCI format 2_1 is CRC-scrambled by an interruption radio network temporary identifier (INT-RNTI).

The size of the DCI format 2_1 is set up to 126 bits by the higher layers and each pre-emption indication is 14 bits.

Here, the pre-emption indication by the DCI format 2_1 is not applied to reception of an SS/PBCH block.

More specifically, the set of the PRBs related to the preemption indication is the same the active DL BWP and includes $B_{INT}$ PRBs.

When the UE detects DCI format 2_1 in the PDCCH transmitted in the CORESET in the slot, the set of the symbols are last $N_{symb}^{slot} \cdot T_{INT} \cdot 2^{\mu - \mu_{INT}}$ before the first symbol of the CORESET in a slot which a PDCCH monitoring period in which $T_{INT}$ is provided by the value of higher layer parameter monitoringSlotPeriodicityAndOffset. $N_{symb}^{slot}$ represents the number of symbols per slot, $\mu$ represents a subcarrier spacing configuration for the serving cell mapped to each field in DCI format 2_1, and $\mu_{INT}$ represents a subcarrier spacing of a DL BWP in which the UE receives the PDCCH having DCI format 2_1.

When the UE is configured to higher layer parameter TDD-UL-DL-ConfigurationCommon, symbols indicated as the uplink by TDD-UL-DL-ConfigurationCommon are not included from last $N_{symb}^{slot} \cdot T_{INT} \cdot 2^{\mu - \mu_{INT}}$ symbols before the first symbol of the CORESET in the corresponding slot. The set of the resulting symbols includes the number of symbols described as $N_{INT}$.

The UE does not expect that values of $\mu$, $\mu_{INT}$, and $T_{INT}$ which are not integers will be provided in respect to the value of $N_{symb}^{slot} \cdot T_{INT} \cdot 2^{\mu - \mu_{INT}}$.

The UE does not expect to be configured by higher layer parameter monitoringSymbolsWithinSlot having one or more PDCCH monitoring occasions for DCI format 2_1 in the slot.

The UE is provided with indication granularity for PRB sets and the set of symbols by higher layer parameter timeFrequencySet.

Reference DL resources for pre-emption indication are partitioned into (1) M time-domain parts and (2) N frequency domain parts.

Here, {M,N} = {14,1}, {7,2} may be achieved.

A combination of {M,N} is configured by the timeFrequencySet parameter.

## Description of Operation of Present Disclosure

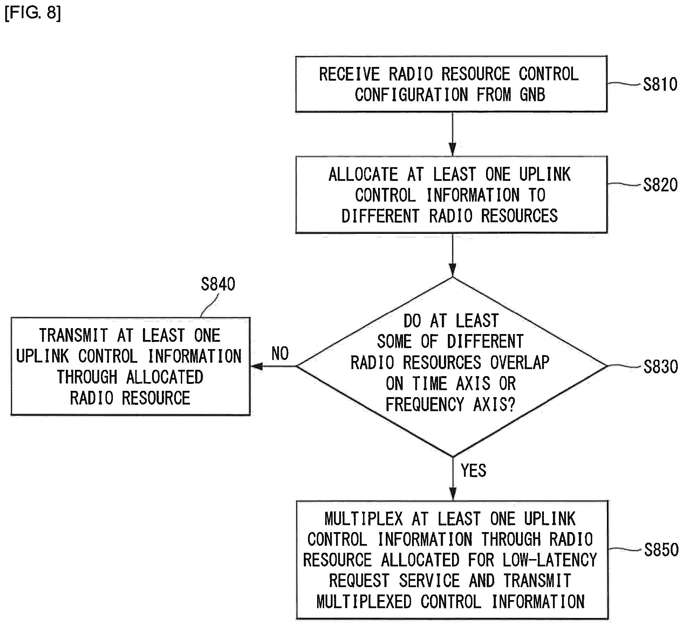

Hereinafter, referring to FIGS. 8 to 16, a method for transmitting/receiving uplink control information on a physical uplink channel of a wireless communication system according to an embodiment of the present disclosure will be described.

FIG. 8 is a flowchart illustrating a method in which a UE of a wireless communication system multiplexes and transmits at least one uplink control information on a physical uplink channel according to a priority according to an embodiment of the present disclosure.

As illustrated in FIG. 8, according to an embodiment of the present disclosure, the UE may receive a radio resource control (RRC) configuration from the gNB (S810).

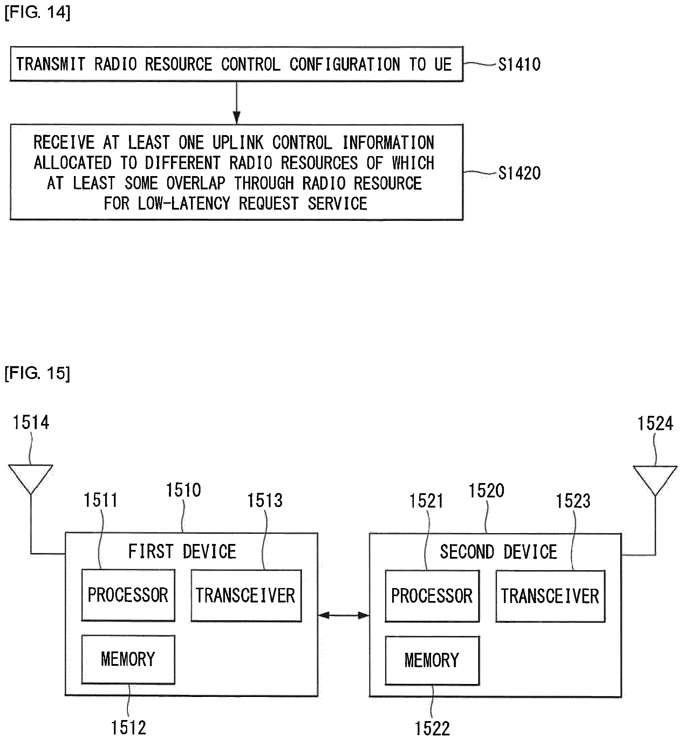

For example, the UE may become a first device 1510 to be described below with reference to FIG. 15. For example, the gNB may become a second device 1520 to be described below with reference to FIG. 15. That is, the UE 1510 or the first device 1510 may receive the radio resource control configuration from the gNB 1520 or the second device 1520.

For example, the radio resource control configuration may include information used for the UE 1510 to transmit/receive data to/from the gNB 1520.

For example, the uplink control information may become Hybrid Automatic Repeat and reQuest Acknowledgement (HARQ-ACK), Scheduling Request (SR), or Channel State Information (CSI). That is, the UE 1510 may transmit, to the gNB 1520, the HARQ-ACK, the scheduling request, or the channel status information.

For example, the UE 1510 may transmit, to the gNB 1520, the user data in addition to the uplink control information.

Here, a radio resource may include a physical uplink channel, and the physical uplink channel may include a Physical Uplink Control Channel (PUCCH) and a Physical Uplink Shared Channel (PUSCH). That is, the UE 1510 may transmit a plurality of uplink control information to the gNB 1520 through a physical uplink control channel or a physical uplink shared channel configured in the UE 1510 in response to the radio resource control configuration.

According to an embodiment of the present disclosure, the UE 1510 may allocate at least one uplink control information to be transmitted to the gNB 1520 to different radio resources (S820).

According to an embodiment of the present disclosure, the UE 1510 may determine whether at least some of different radio resources overlap on a time axis or a frequency axis (S830).

According to an embodiment of the present disclosure, when different radio resources do not overlap with each other, the UE 1510 may transmit each of at least one uplink control information to the gNB 1520 through the allocated radio resource (S840).

According to an embodiment of the present disclosure, when at least some of different radio resources to which at least one uplink control information is allocated overlap with each other, the UE 1510 may select a radio resource allocated for a service requiring a low latency even among the overlapped uplink control information, and multiplex at least one uplink control information through the selected radio resource and transmit the multiplexed uplink control information (S850).

For example, a specific UE 1510 may simultaneously use a plurality of different services having different requirements. For example, the UE 1510 may simultaneously use an eMBB service (or traffic) and a URLLC service.

For example, the UE 1510 may determine which requirement each of different radio resources is allocated for a service having. For example, the service may be one of the Enhanced Mobile Broadband (eMBB), Massive Machine Type Communications (mMTC), Ultra-Reliable and Low Latency Communications (URLLC), and vehicle-to-everything (V2X) services described above.

For example, the UE 1510 may check a radio resource allocated for a service having a high priority among different services allocated to different radio resources according to a priority preconfigured based on the requirement of each service. For example, the UE 1510 may check a radio resource allocated for the URLLC service which is a low-latency request service among different services allocated to different radio resources according to the priority preconfigured based on the requirement of each service.

Further, when the UE 1510 simultaneously uses services having different requirements or different attributes such as a low latency time, a high reliability, etc., unlike a general service, the UE may be configured to preferentially transmit services having different requirements or different attributes such as the low latency time, the high reliability, etc.

That is, the UE 1510 may determine whether uplink control information corresponding to the URLLC service having different requirements or different attributes such as the low latency time, the high reliability, etc., and uplink control information corresponding to a service (e.g., eMBB service) different from the URLLC service overlap on at least one axis of the time axis or the frequency axis.

Then, the UE 1510 may multiplex user data and/or uplink control information related to the URLLC service which prioritizes another service through the radio resource allocated for the URLLC service together with the user data and/or uplink control information related to another service, and transmit the multiplexed user data and/or uplink control information to the gNB 1520.

For example, when first uplink control information and second uplink control information overlap on at least one of the time axis or the frequency axis, the UE 1510 may multiplex the second uplink control information related to a second service having a higher priority than a first service through a radio resource allocated for a second service together with the first uplink control information, and transmit the multiplexed second uplink control information to the gNB 1520. As another example, the UE 1510 may piggyback the second uplink control information corresponding to the second service having the higher priority than the first service to the first uplink control information. As yet another example, the UE 1510 may joint-encode the second uplink control information corresponding to the second service having the higher priority than the first service together with the first uplink control information. As still yet another example, the UE 1510 may scramble the second uplink control information corresponding to the second service having the higher priority than the first service together with the first uplink control information.

Further, the UE 1510 may determine whether there is the radio resource control configuration related to the URLLC service in the radio resource control configuration received from the gNB 1520.

As a determination result, when the radio resource control configuration related to the URLLC service is included in the radio resource control configuration received from the gNB 1520, the UE 1510 may check a parameter set (e.g., a set of beta offsets) related to the operation of multiplexing and transmitting the uplink control information, and multiplex the uplink control information and/or user data related to the URLLC service based on the parameter set and transmit the multiplexed uplink control information and/or user data.

For example, the UE 1510 may transmit the uplink control information and/or user data corresponding to the URLLC service through the physical uplink shared channel (PUSCH) or the physical uplink control channel (PUCCH) allocated for the URLLC service based on the RRC parameter set.

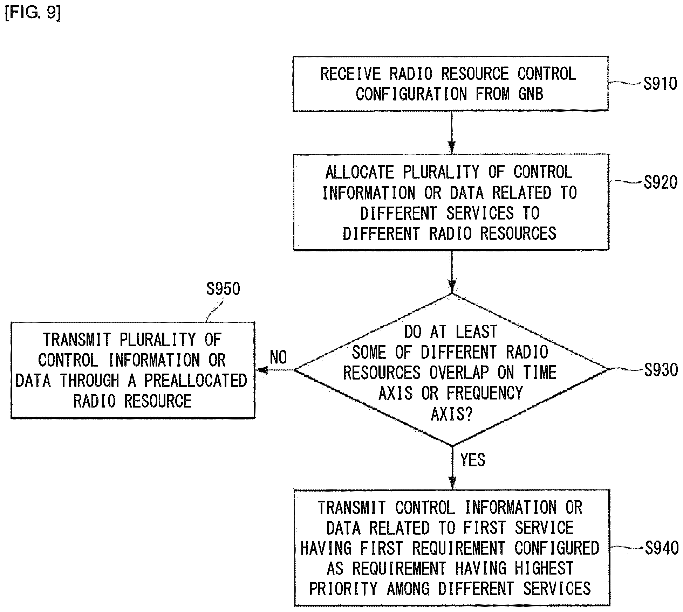

In this case, the UE 1510 may configure the priority between the uplink control information and the user data in each service and may consider a complex priority between different service, and the complex priority will be described below in detail with reference to FIGS. 9 to 13.

FIG. 9 is a flowchart illustrating a method for configuring a priority according to another embodiment of the present disclosure.

When the UE 1510 determines the uplink control information or user data to be transmitted, the UE 1510 may continuously transmit uplink control information or user data corresponding to a specific service by taking precedence over another uplink control information or user data.

In other words, the UE 1510 may allow the specific service to have the priority over another service. Here, the specific service which has the priority over another service may be preconfigured by the gNB 1520.

As illustrated in FIG. 9, according to another embodiment of the present disclosure, the UE 1510 may receive the radio resource control configuration from the gNB (S910).

The UE 1510 may allocate a plurality of control information or data related to different services to different radio resources (S920).

The UE 1510 may determine whether at least some of different radio resources overlap on the time axis or the frequency axis (S930).

For example, when the UE 1510 simultaneously uses the first service (eMBB service) and the second service (URLLC), the UE 1510 may determine whether a first radio resource to which the uplink control information or user data corresponding to the first service and a second radio resource to which the uplink control information or user data corresponding to the second service in a specific time domain at least partially overlap with each other.

For example, the UE 1510 may distinguish the first service and the second service by an LCH layer which is a higher layer of a physical layer. As another example, the UE 1510 may receive a downlink control information (DCI) format or a radio network temporary identifier (RNTI) and distinguish the first service and the second service by using the downlink control information format or the radio network temporary identifier.

For example, when the uplink control information is the scheduling request (SR), the UE 1510 may check a service related to the corresponding scheduling request (SR) by using an LCH in which the corresponding scheduling request (SR) is configured.

For example, when the uplink control information is the channel status information (CSI), the UE 1510 may configure or distinguish a service (use case) in a channel status information (CSI) configuration or check a service related to the channel status information by using the LCH in which the channel status information is configured.

For example, when the uplink control information is the HARQ-ACK, the UE 1510 may determine whether there is a physical downlink shared channel (PDSCH) corresponding to an important service (use case) among physical downlink shared channels (PDSCHs) corresponding to the HARQ-ACK in a corresponding HARQ-ACK codebook. When there is the physical downlink shared channel (PDSCH) corresponding to the important service (use case) among the physical downlink shared channels (PDSCHs) corresponding to the HARQ-ACK in the corresponding HARQ-ACK codebook, the UE 1510 may assume that the corresponding HARQ-ACK corresponds to the important service (use case).

As the determination result, when some radio resources overlap with each other, the UE 1510 may transmit control information or data related to the first service having a first requirement configured as a most prioritized requirement among different services by taking the priority over another control information or data (S940).

Unlike this, as the determination result, when some radio resources do not overlap with each other, the UE 1510 may transmit each of a plurality of control information or data through a preallocated radio resource (S950).

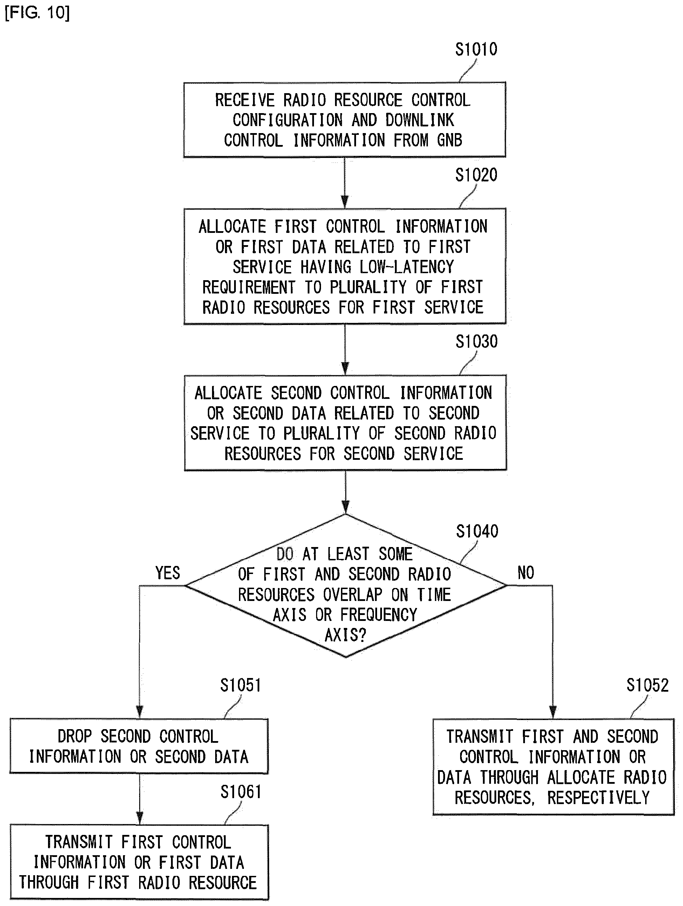

FIG. 10 is a flowchart illustrating a method for configuring a priority according to still yet another embodiment of the present disclosure.

For example, the UE 1510 may preferentially transmit the URLLC service in preference to the eMBB service, however, the UE 1510 may be configured to transmit only URLLC uplink control information or user data for the physical uplink shared channel (PUSCH) or the physical uplink control channel (PUCCH) for the URLLC service while transmitting only eMBB uplink control information or user data for the physical uplink shared channel (PUSCH) or the physical uplink control channel (PUCCH) for the eMBB service.

For example, the UE 1510 which simultaneously uses the eMBB service and the URLLC service may transmit only the uplink control information or user data related to the eMBB service to the physical uplink shared channel (PUSCH) for the eMBB service or the physical uplink control channel (PUCCH) for the eMBB service and transmit only the uplink control information or user data related to the URLLC service to the physical uplink shared channel (PUSCH) or the physical uplink control channel (PUCCH) for the URLLC service.

Further, when control information or radio resources to be transmitted between the eMBB service and the URLLC service overlap, the UE 1510 may drop the uplink control information or the physical uplink channel (PUCCH or PUSCH) corresponding to the eMBB service and preferentially use the uplink control information or the physical link channel corresponding to the URLLC service.

For example, when HARQ-ACK information related to the eMBB and the physical uplink control channel (PUCCH) for the eMBB service, and the physical uplink shared channel (PUSCH) for the URLLC service overlap in the same time domain, the UE 1510 may drop the HARQ-ACK related to the eMBB service and transmit uplink control information related to the URLLC service through the physical uplink shared channel (PUSCH) for the URLLC service.

In addition, when the HARQ-ACK related to the eMBB service and the physical uplink control channel (PUCCH) for the eMBB service and the HARQ-ACK related to the URLLC service and the physical uplink control channel (PUCCH) for the URLLC service overlap in the same time domain, the UE 1510 may not send the HARQ-ACK related to the eMBB service and the HARQ-ACK related to the URLLC service together, and drop the HARQ-ACK related to the eMBB service and transmit the HARQ-ACK related to the URLLC service through the physical uplink control channel (PUCCH) for the URLLC.

To this end, as described above, in the eMBB service and the URLLC service, the gNB 1520 may transmit, to the UE 1510, the radio resource control (RRC) configuration or RRC parameter associated with the eMBB service and the URLLC service.

For example, an RRC parameter set used for transmission of the physical uplink control channel (PUCCH) may be configured differently for each service. Further, an RRC parameter set used for transmission of the physical uplink shared channel (PUSCH) may be configured differently for each service. That is, the gNB 1520 may transmit the RRC parameter set configured for each different service to the UE 1510, and the UE 1510 may multiplex the uplink control information and/or user data through the physical uplink control channel (PUCCH) or the physical uplink shared channel (PUSCH) allocated for each service based on the RRC parameter set for each service, and transmit the multiplexed uplink control information and/or user data to the gNB 1520.

Furthermore, an RRC resource configuration (PUCCH resource configuration) used for transmission of the physical uplink control channel (PUCCH) may be configured differently for each service. Furthermore, an RRC resource configuration (PUCCH resource configuration) used for transmission of the physical uplink shared channel (PUSCH) may be configured differently for each service. That is, the gNB 1520 may transmit the RRC configuration configured for each different service to the UE 1510, and the UE 1510 may multiplex the uplink control information and/or user data through the physical uplink control channel (PUCCH) or the physical uplink shared channel (PUSCH) allocated for each service based on the RRC configuration for each service, and transmit the multiplexed uplink control information and/or user data to the gNB 1520.

In addition, in order to distinguish the uplink control information (UCI) associated with each service in L1 signaling, the UE 1510 may use a different Downlink Control Information (DCI) format, or use a different Radio Network Temporary Identifier (RNTI), and different Cyclic Redundancy Check (CRC) masking and/or scrambling.

Similarly, in the case of the physical uplink control channel (PUCCH), a physical uplink control channel (PUCCH) format may be included, and the UE 1510 may check each service (use case) of each physical uplink control channel (PUCCH) format and the available physical uplink control channel (PUCCH) resource set for each downlink control information (DCI) format), for each CORESET, or by using the radio network temporary identifier (RNTI).

Furthermore, when the HARQ-ACKs corresponding to the physical downlink shared channels (PDSCHs) corresponding to different services (use cases) at least partially overlap on the time axis or the frequency axis, the UE 1510 may transmit control information or data related to a highest priority use case among bits of the HARQ-ACK which belongs to each service (use case) in preference with control information or data related to another service or assume that HARQ-ACK multiplexing between other services is not available.

As illustrated in FIG. 10, according to another embodiment of the present disclosure, the UE 1510 may receive a radio resource control configuration and downlink control information (DCI) from the gNB (S1010).

The UE 1510 may allocate first control information or first data related to a first service requiring a low-latency requirement to a plurality of first radio resources (S1020).

Next, the UE 1510 may allocate second control information or second data related to a second service to a plurality of second radio resources (S1030).

Next, the UE 1510 may determine whether the first radio resource and the second radio resource overlap on at least a part of the time axis or the frequency axis (S1040).

As the determination result, when the first radio resource and the second radio resource overlap on at least a part, the UE 1510 may drop the second control information or second data related to the second service (S1051).

Next, the UE 1510 may preferentially transmit the first control information or the first data through the first radio resource (S1061).

Unlike this, when the first radio resource and the second radio resource do not overlap, the UE 1510 may transmit the second control information or second data information through the allocated second radio resource while transmitting the first control information or first data information through the allocated first radio resource (S1052).

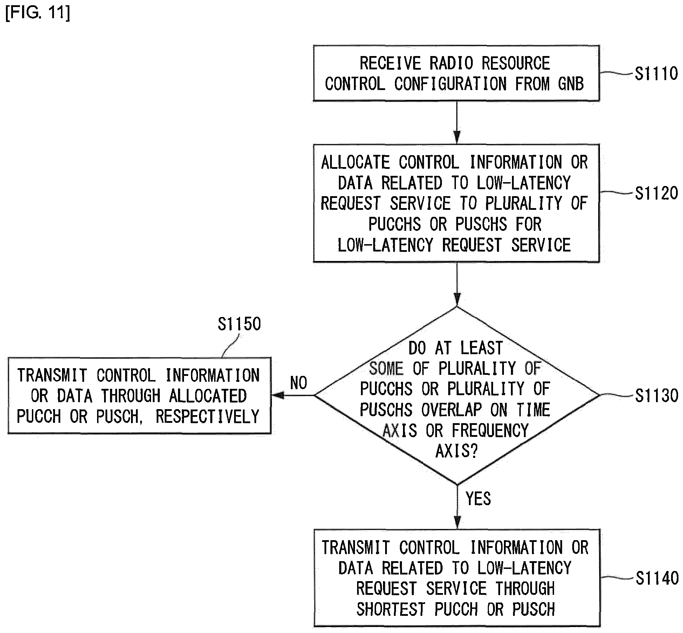

FIG. 11 is a flowchart illustrating a method for configuring a priority according to still yet another embodiment of the present disclosure.

The UE 1510 may transmit the uplink control information and/or the user data by preferentially using a shortest physical uplink channel among the physical uplink channels when the uplink control information and/or the user data related to the URLLC service, and the physical uplink control channel (PUCCH) or the physical uplink shared channel (PUSCH) are secured while configuring to preferentially transmit the URLLC service in preference with the eMBB service.

For example, when a plurality of physical uplink control channels (PUCCHs) allocated for the URLLC service overlaps with each other or the physical uplink shared channels (PUSCHs) overlap with each other, the UE 1510 may transmit the control information or data by using a shortest physical uplink control channel (PUCCH) or a shortest physical uplink shared channel (PUSCH).

As illustrated in FIG. 11, the UE 1510 may receive the radio resource control configuration from the gNB (S1110).

Next, the UE 1510 may allocate control information or data related to a low-latency request service to a plurality of PUCCHs or PUSCHs for the low-latency request service (S1120).

Next, the UE 1510 may determine whether the plurality of PUCCHs or the plurality of PUSCHs at least partially overlap on the time axis or the frequency axis (S1130).

As the determination result, when the plurality of PUCCHs or the plurality of PUSCHs do not overlap, the UE 1510 may transmit, to the gNB 1520, the control information or data related to the low-latency request service through each PUCCH and PUSCH for a pre-allocated low-latency request service.

Unlike this, when some of the plurality of PUCCHs overlap with each other or some of the plurality of PUSCHs overlap with each other, the UE 1510 may transmit the control information or data related to the low-latency request service through the shortest PUCCH among the plurality of PUCCHs or transmit, to the gNB 1520, the control information or data related to the low-latency request service through the shortest PUSCH among the plurality of PUSCHs.

Through the method, the UE 1510 may sufficiently secure a feedback time while achieving a shorter latency time than the existing latency time, and as a result, the UE 1510 may achieve a low latency requirement.

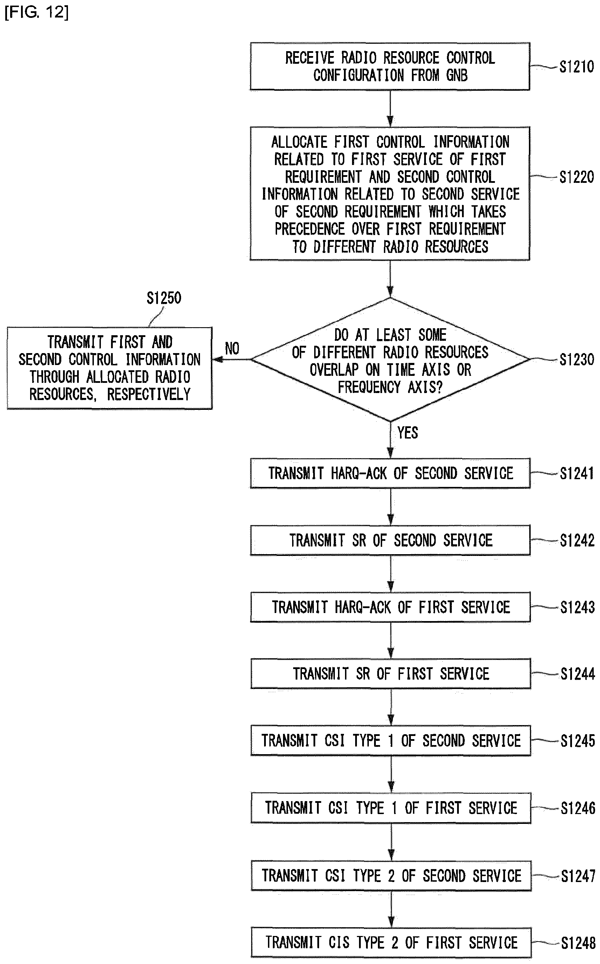

FIG. 12 is a flowchart illustrating a method for configuring a priority according to still yet another embodiment of the present disclosure.

When the uplink control information may be distinguished by the scheduling request (SR), the HARQ-ACK, channel status information (CSI) type 1 (CSI_1), and channel status information (CSI) type 2 (CSI_2), the UE 1510 may configure the priority according to the following rule.

For example, the UE 1510 may preferentially configure the HARQ-ACK and the scheduling request (SR) of the second service (e.g., URLLC) over the HARQ-ACK and the scheduling request (SR) of the first service (e.g., eMBB service) while configuring the channel status information (CSI) as a secondary order of the HARQ-ACK and the scheduling request (SR), but may preferentially configure the HARQ-ACK over the scheduling request (SR). That is, the UE 1510 may configure the HARQ-ACK related to the URLLC service as a primary order and then, configure the priority in the order of the scheduling request (SR) related to the URLLC service, the HARQ-ACK related to the eMBB service, and the scheduling request (SR) related to the eMBB service.

Furthermore, the UE 1510 may preferentially configure channel status information type 1 (CSI type 1) over channel status information type 2 (CSI type 2) for channel status information (CSI) excluded as the secondary order of the HARQ-ACK and the scheduling request described above, however, may preferentially the second service (URLLC) over the first service (eMBB) for the same type of channel status information. That is, the UE 1510 may configure channel status information type 1 (CSI type 1) of the URLLC service as the primary order among the channel status information (CSI) and then, configure the priority in the order of channel status information type 1 (CSI type 1) of the eMBB service, channel status information type 2 (CSI type 2) of the URLLC service, and channel status information type 2 (CSI type 2) of the eMBB service.

In conclusion, the UE 1510 may configure the priority between a plurality of uplink control information of the URLLC service and a plurality of uplink control information of the eMBB service in the order of the HARQ-ACK of the URLLC service, the scheduling request (SR) of the URLLC service, the HARQ-ACK of the eMBB service, the scheduling request (SR) of the eMBB service, channel status information type 1 (CSI type 1) of the URLLC service, channel status information type 2 (CSI type 2) of the URLLC service, channel status information type 1 (CSI type 1) of the eMBB service, and channel status information type 2 (CSI type 2) of the eMBB service, and multiplex the uplink control information and transmit the multiplexed uplink control information to the gNB 1520.

For example, as illustrated in FIG. 12, the UE 1510 may receive the radio resource control configuration from the gNB 1520 (S1210) and then, may allocate the first control information related to the first service of the first requirement and the second control information related to the second service of the second requirement which takes precedence over the first requirement to different radio resources, respectively (S1220).

In this case, the UE 1510 may determine whether at least some of different radio resources overlap on the time axis or the frequency axis (S1230).

As the determination result, when at least some do not overlap, the UE 1510 may transmit the first control information and the second control information to the gNB 1520 through the allocated radio resources, respectively (S1250).

Unlike this, when at least some of different radio resources overlap, the UE 1510 may first configure the HARQ-ACK of the second service (URLLC) having a high priority as the primary order (S1241) and then, preferentially transmit the SR (S1242) of the second service (URLLC), the HARQ-ACK (S1243) of the first service (eMBB), and the SR of the first service (eMBB) (S1244).

The HARQ-ACKs and the SRs related to the first service (eMBB) and the second service (URLLC) may be preferentially configured and the UE 1510 may determine the priority in the order of channel status information type 1 of the first service (eMBB) (S1246), channel status information type 2 related to the second service (URLLC) (S1247), and last channel status information type 2 related to the first service (EMBB) (S1248) starting from channel status information (CSI) type 1 of the second service (URLLC) (S1245).

Through the method, the UE 1510 may allow the scheduling request (SR) or HARQ-ACK transmission related to the eMBB to be protected from transmission of low-priority uplink control information related to the URLLC, i.e., channel status information (CSI) transmission, and as a result, the URLLC uplink control information transmission may take precedence over the eMBB and an adverse effect applied to the eMBB may be minimized.

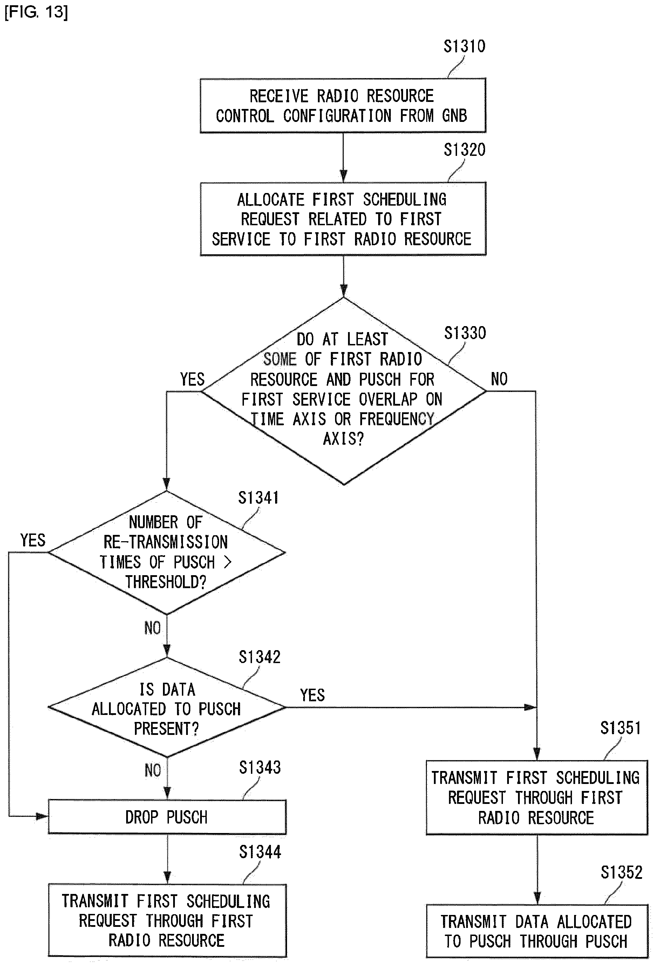

FIG. 13 is a flowchart illustrating a method for configuring a priority according to still yet another embodiment of the present disclosure.

The UE 1510 may determine the priority for various services by using multiple LCHs and quality of service (QoS) in a media access control (MAC) layer different from the physical layer. For example, when the service (or traffic) used by the UE 1510 requires a particular attribute or requirement, e.g., a sporadic or low latency time and high reliability like URLLC, an operation of the UE 1510 may be different from an L1 operation.

Accordingly, the following may be considered when the UE 1510 uses only one service (e.g., URLLC service) having a different requirement or a different attribute such as the low latency time and the high reliability unlike a general service.

For example, the UE 1510 may preferentially transmit the scheduling request (SR) over transmission through the physical uplink shared channel (PUSCH) resource according to a preconfigured condition.

As illustrated in FIG. 13, the UE 1510 may receive the radio resource control configuration from the gNB 1520 (S1310) and allocate a first scheduling request (SR) related to the first service to the first radio resource (S1320).

Next, the UE 1510 may determine whether the first radio resource and the physical uplink shared channel (PUSCH) which is the other radio resource for the first service overlap on at least a part of the time axis or the frequency axis (S1330).

As the determination result, when the first radio resource and the physical uplink shared channel do not overlap, the UE 1510 may transmit the first scheduling request through the first radio resource (S1351) and transmit data allocated to the physical uplink shared channel (PUSCH) through the physical uplink shared channel (PUSCH) (S1352).

When the first radio resource to which the first scheduling request is allocated and the physical uplink shared channel (PUSCH) overlap as the determination result, the UE 1510 may determine whether the number of multiple transmission times of the physical uplink shared channel (PUSCH) is equal to or more than a threshold (S1341).

For example, multiple transmission may mean HARQ re-transmission in which the UE 1510 receives and performs uplink (UL) grant and/or downlink (DL) assignment again.

Further, the multiple transmission may mean that the same data is continuously repeatedly transmitted based on preconfigured or pre-indicated information. For example, when a physical downlink shared channel (PDCCH) - aggregation factor is configured in the UE 1510, the UE 1510 may apply the same symbol allocation onto continuous slots based on the physical downlink shared channel (PDCCH) - aggregation factor and in this case, the UE 1510 may define repeatedly transmitting a transmission block (TB) in each symbol allocation on continuous slots based on the physical downlink shared channel (PDCCH) - aggregation factor as the multiple transmission. As another example, when a physical uplink shared channel (PUCCH) - aggregation factor is configured in the UE 1510, the UE 1510 may apply the same symbol allocation onto continuous slots based on the physical uplink shared channel (PUCCH) - aggregation factor and in this case, the UE 1510 may define repeatedly transmitting the transmission block (TB) in each symbol allocation on continuous slots based on the physical uplink shared channel (PUCCH) - aggregation factor as the multiple transmission.

For example, the threshold for the number of multiple transmission times may be determined through higher layer signaling. That is, the UE 1510 may determine whether the number of multiple transmission times of the physical uplink shared channel (PUSCH) is equal to or more than the threshold determined through the higher layer signaling.

If the physical uplink shared channel (PUSCH) is not re-transmitted when the number of multiple transmission times is equal or more than the threshold as the determination result, the UE 1510 may determine whether there is data allocated to the physical uplink shared channel (PUSCH) (S1342).

For example, the UE 1510 may determine whether the uplink shared channel (UL-SCH) is channel status information (CSI) or signaling point channel status information (SP-CSI) on a physical uplink shared channel (PUSCH) which is not present.

As the determination result, when there is no data allocated to the physical uplink shared channel (PUSCH) in step S1342 or when the number of re-transmission times of the physical uplink shared channel (PUSCH) is more than a threshold as the determination result in step S1341, the UE 1510 may drop the physical uplink shared channel (PUSCH) (S1343) and transmit the first scheduling request through the first radio resource (S1344).

Further, although not illustrated in FIG. 13, when the number of re-transmission times of the physical uplink shared channel (PUSCH) is more than the threshold as the determination result in step S1341, the UE 1510 may puncture a signal for the physical uplink shared channel (PUSCH) or for a location of the physical uplink shared channel (PUSCH) and transmit the first scheduling request through the first radio resource, and the present disclosure need not particularly be limited thereto.

A drop operation or a puncturing operation for the physical uplink shared channel (PUSCH) is performed, and as a result, an effect which may be expected is as follows.

In the case of the existing technology, in transmitting a buffer status report (BSR) to the physical uplink shared channel (PUSCH), the UE 1510 may repeatedly transmit the user data through the physical uplink shared channel (PUSCH) or when the UE 1510 transmits the physical uplink shared channel (PUSCH) without the uplink shared channel (UL-SCH), it is impossible to reflect a current buffer state of the UE 1510. As a result, even when traffic having requiring an urgent requirement is generated in the UE 1510, since the gNB 1520 may not know the buffer state of the UE 1510 in which the traffic is generated, it is difficult to allocate a resource (e.g., physical uplink shared channel (PUSCH)) corresponding to the urgent requirement to the UE 1510 in a state in which the buffer state is not reported.

However, unlike the existing technology, as illustrated in FIG. 13, the drop operation or puncturing operation is performed for the physical uplink shared channel (PUSCH) according to a preconfigured condition, and as a result, when the number of repeated transmission times of the corresponding physical uplink shared channel (PUSCH) is equal to or more than a predetermined threshold or when transmission of the physical uplink shared channel (PUSCH) without the uplink shared channel (UL-SCH) is performed, the UE 1510 may transmit the scheduling request to the GNB 1520 regardless of the transmission of the physical uplink shared channel (PUSCH), and as a result, there is an effect that a latency time requirement required in a new RAT (NR) technology may be satisfied.

For example, the UE 1510 may preferentially transmit the scheduling request (SR) over the physical uplink shared channel (PUSCH), joint-encode the scheduling request (SR) together with the channel status information (CSI), or express the scheduling request (SR) by scrambling.

When encoding the scheduling request (SR) together with the channel status information (CSI), the UE 1510 may continuously transmit bits of the scheduling request (SR) to the physical uplink shared channel (PUSCH) for the channel status information (CSI) without the uplink shared channel (UL-SCH) in a scheduling request (SR) transmission occasion.

Meanwhile, when there is data allocated to the physical uplink shared channel (PUSCH) as the determination result in step S1342, the UE 1510 may transmit the first scheduling request through the first radio resource according to steps S1351 and S1352 described above and transmit, to the gNB 1520, data allocated to the PUSCH through the physical uplink shared channel (PUSCH).

FIG. 14 is a flowchart illustrating a method for receiving, by a gNB, uplink control information from a UE in a wireless communication system according to an embodiment of the present disclosure.

As illustrated in FIG. 14, the gNB 1520 may transmit the radio resource control configuration to the UE 1510 (S1410).

Next, the gNB 1520 may receive at least one uplink control information allocated to different radio resources of which at leas some among the plurality of resources overlap through the radio resource for the low-latency request service (S1420).

## General device to which the present disclosure may be applied

FIG. 15 illustrates a block diagram of an example of a wireless communication device to which examples described in this disclosure may be applied.

Referring to FIG. 15, a wireless communication system may include a first device 1110 and a second device 1520.

The first device 1510 may be a device related to a base station, a network node, a transmission user equipment (UE), a reception UE, a radio device, a wireless communication device, a vehicle, a vehicle on which a self-driving function is mounted, a connected car, a drone (unmanned aerial vehicle (UAV)), an artificial intelligence (AI) module, a robot, an augmented reality (AR) device, a virtual reality (VR) device, a mixed reality (MR) device, a hologram device, a public safety device, an MTC device, an IoT device, a medical device, a FinTech device (or financial device), a security device, a climate/environment device, a device related to 5G service or a device related to the fourth industrial revolution field in addition to the devices.

The second device 1520 may be a device related to a base station, a network node, a transmission UE, a reception UE, a radio device, a wireless communication device, a vehicle, a vehicle on which a self-driving function is mounted, a connected car, a drone (unmanned aerial vehicle (UAV)), an artificial intelligence (AI) module, a robot, an augmented reality (AR) device, a virtual reality (VR) device, a mixed reality (MR) device, a hologram device, a public safety device, an MTC device, an IoT device, a medical device, a FinTech device (or financial device), a security device, a climate/environment device, a device related to 5G service or a device related to the fourth industrial revolution field in addition to the devices.

For example, the UE may include a portable phone, a smart phone, a laptop computer, a terminal for digital broadcasting, a personal digital assistants (PDA), a portable multimedia player (PMP), a navigator, a slate PC, a tablet PC, an ultrabook, a wearable device (e.g., a watch type terminal (smartwatch), a glass type terminal (smart glass), a head mounted display (HMD)), and so on. For example, the HMD may be a display device of a form, which is worn on the head. For example, the HMD may be used to implement VR, AR or MR.

For example, the drone may be a flight vehicle that flies by a wireless control signal without a person being on the flight vehicle. For example, the VR device may include a device implementing the object or background of a virtual world. For example, the AR device may include a device implementing the object or background of a virtual world by connecting it to the object or background of the real world. For example, the MR device may include a device implementing the object or background of a virtual world by merging it with the object or background of the real world. For example, the hologram device may include a device implementing a 360-degree stereographic image by recording and playing back stereographic information using the interference phenomenon of a light beam generated when two lasers called holography are met. For example, the public safety device may include a video relay device or an imaging device capable of being worn on a user's body. For example, the MTC device and the IoT device may be a device that does not require a person's direct intervention or manipulation. For example, the MTC device and the IoT device may include a smart meter, a vending machine, a thermometer, a smart bulb, a door lock or a variety of sensors. For example, the medical device may be a device used for the purpose of diagnosing, treating, reducing, handling or preventing a disease. For example, the medical device may be a device used for the purpose of diagnosing, treating, reducing or correcting an injury or obstacle. For example, the medical device may be a device used for the purpose of testing, substituting or modifying a structure or function. For example, the medical device may be a device used for the purpose of controlling pregnancy. For example, the medical device may include a device for medical treatment, a device for operation, a device for (external) diagnosis, a hearing aid or a device for a surgical procedure. For example, the security device may be a device installed to prevent a possible danger and to maintain safety. For example, the security device may be a camera, CCTV, a recorder or a blackbox. For example, the FinTech device may be a device capable of providing financial services, such as mobile payment. For example, the FinTech device may include a payment device or point of sales (POS). For example, the climate/environment device may include a device for monitoring or predicting the climate/environment.

The first device 1510 may include at least one processor such as a processor 1511, at least one piece of memory such as memory 1512, and at least one transceiver such as a transceiver 1513. The processor 1511 may perform the above-described functions, procedures, and/or methods. The processor 1511 may perform one or more protocols. For example, the processor 1511 may perform one or more layers of a radio interface protocol. The memory 1512 is connected to the processor 1511, and may store various forms of information and/or instructions. The transceiver 1113 is connected to the processor 1511, and may be controlled to transmit and receive radio signals.

The second device 1520 may include at least one processor such as a processor 1521, at least one piece of memory device such as memory 1522, and at least one transceiver such as a transceiver 1523. The processor 1521 may perform the above-described functions, procedures and/or methods. The processor 1521 may implement one or more protocols. For example, the processor 1521 may implement one or more layers of a radio interface protocol. The memory 1522 is connected to the processor 1521, and may store various forms of information and/or instructions. The transceiver 1523 is connected to the processor 1121 and may be controlled transmit and receive radio signals.

The memory 1112 and/or the memory 1522 may be connected inside or outside the processor 1511 and/or the processor 1521, respectively, and may be connected to another processor through various technologies, such as a wired or wireless connection.

The first device 1510 and/or the second device 1520 may have one or more antennas. For example, the antenna 1514 and/or the antenna 1524 may be configured to transmit and receive radio signals.

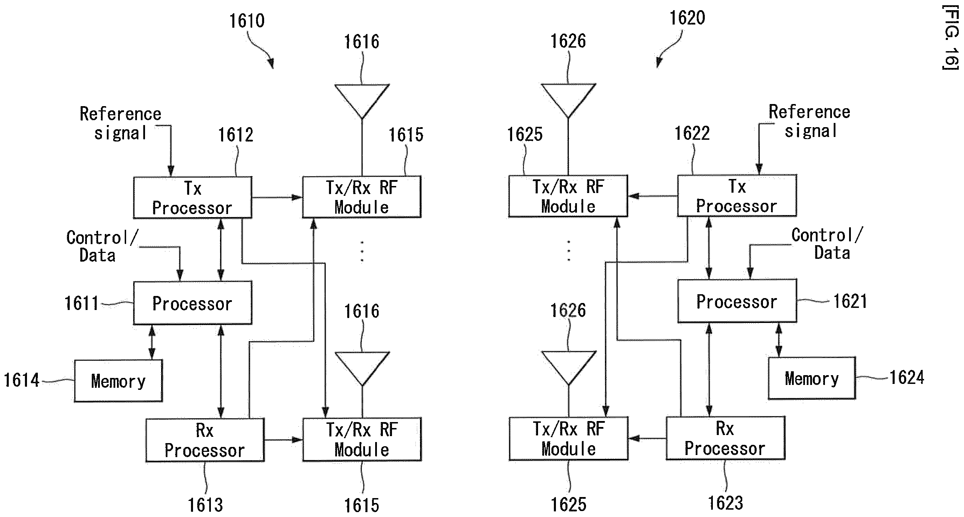

FIG. 16 illustrates another example of a block configuration diagram of a wireless communication device to which examples described by the present disclosure are applicable.

Referring to FIG. 16, a wireless communication system includes a base station 1610 and multiple UEs 1620 positioned in a region of the base station. The base station 1610 may be represented by a transmitter, and the UE 1620 may be represented by a receiver, or vice versa. The base station 1610 and the UE 1620 respectively include processors 1611 and 1621, memories 1614 and 1624, one or more Tx/Rx RF modules 1615 and 1625, Tx processors 1612 and 1622, Rx processors 1613 and 1623, and antennas 1616 and 1626. The processors implement functions, processes, and/or methods mentioned above. More specifically, in DL (communication from the base station to the UE), an upper layer packet from a core network is provided to the processor 1611. The processor implements functionality of the L2 layer. In the DL, the processor provides multiplexing between a logical channel and a transport channel and radio resource allocation to the UE 1620 and is also responsible for signaling to the UE 1620. The transmit (Tx) processor 1612 implements various signal processing functions for the L1 layer (i.e., physical layer). The signal processing functions include coding and interleaving to facilitate forward error correction (FEC) at the UE. The coded and modulated symbols are split into parallel streams, and each stream is mapped to an OFDM subcarrier, multiplexed with a reference signal (RS) in time and/or frequency domain, and combined together using an Inverse Fast Fourier Transform (IFFT) to produce a physical channel carrying a time domain OFDMA symbol stream. The OFDMA stream is spatially precoded to produce multiple spatial streams. Each spatial stream may be provided to the different antenna 1616 via a separate Tx/Rx module (or transceiver 1615). Each Tx/Rx module may modulate an RF carrier with a respective spatial stream for transmission. At the UE, each Tx/Rx module (or transceiver 1625) receives a signal through the respective antenna 1626 of each Tx/Rx module. Each Tx/Rx module recovers information modulated onto an RF carrier and provides the information to the receive (Rx) processor 1623. The RX processor implements various signal processing functions of the Layer 1. The Rx processor may perform spatial processing on the information to recover any spatial stream destined for the UE. If multiple spatial streams are destined for the UE, they may be combined into a single OFDMA symbol stream by the multiple Rx processors. The Rx processor converts the OFDMA symbol stream from the time domain to the frequency domain using a Fast Fourier Transform (FFT). The frequency domain signal includes a separate OFDMA symbol stream for each subcarrier of the OFDM signal. The symbols on each subcarrier and the reference signal are recovered and demodulated by determining the most likely signal constellation points transmitted by the base station. These soft decisions may be based on channel estimation values. The soft decisions are decoded and deinterleaved to recover data and control signals that were originally transmitted by the base station on the physical channel. The corresponding data and control signals are provided to the processor 1621.

UL (communication from the UE to the base station) is processed at the base station 1610 in a manner similar to the description associated with a receiver function at the UE 1620. Each Tx/Rx module 1625 receives a signal through the respective antenna 1626. Each Tx/Rx module provides an RF carrier and information to the Rx processor 1623. The processor 1621 may be associated with the memory 1624 that stores a program code and data. The memory may be referred to as a computer readable medium.

## Use case

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver can drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system can support remote treatment providing clinical treatment at a distant place. This helps to reduce a barrier for the distance and can improve access to medical services which are not continuously used at remote farming areas. Furthermore, this is used to save life in important treatment and an emergency condition. A radio sensor network based on mobile communication can provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

## Artificial intelligence (AI)

Artificial intelligence means the field in which artificial intelligence or methodology capable of producing artificial intelligence is researched. Machine learning means the field in which various problems handled in the artificial intelligence field are defined and methodology for solving the problems are researched. Machine learning is also defined as an algorithm for improving performance of a task through continuous experiences for the task.

An artificial neural network (ANN) is a model used in machine learning, and is configured with artificial neurons (nodes) forming a network through a combination of synapses, and may mean the entire model having a problem-solving ability. The artificial neural network may be defined by a connection pattern between the neurons of different layers, a learning process of updating a model parameter, and an activation function for generating an output value.

The artificial neural network may include an input layer, an output layer, and optionally one or more hidden layers. Each layer includes one or more neurons. The artificial neural network may include a synapse connecting neurons. In the artificial neural network, each neuron may output a function value of an activation function for input signals, weight, and a bias input through a synapse.

A model parameter means a parameter determined through learning, and includes the weight of a synapse connection and the bias of a neuron. Furthermore, a hyper parameter means a parameter that needs to be configured prior to learning in the machine learning algorithm, and includes a learning rate, the number of times of repetitions, a mini-deployment size, and an initialization function.

An object of learning of the artificial neural network may be considered to determine a model parameter that minimizes a loss function. The loss function may be used as an index for determining an optimal model parameter in the learning process of an artificial neural network.

Machine learning may be classified into supervised learning, unsupervised learning, and reinforcement learning based on a learning method.

Supervised learning means a method of training an artificial neural network in the state in which a label for learning data has been given. The label may mean an answer (or a result value) that must be deduced by an artificial neural network when learning data is input to the artificial neural network. Unsupervised learning may mean a method of training an artificial neural network in the state in which a label for learning data has not been given. Reinforcement learning may mean a learning method in which an agent defined within an environment is trained to select a behavior or behavior sequence that maximizes accumulated compensation in each state.

Machine learning implemented as a deep neural network (DNN) including a plurality of hidden layers, among artificial neural networks, is also called deep learning. Deep learning is part of machine learning. Hereinafter, machine learning is used as a meaning including deep learning.

## Robot

A robot may mean a machine that automatically processes a given task or operates based on an autonomously owned ability. Particularly, a robot having a function for recognizing an environment and autonomously determining and performing an operation may be called an intelligence type robot.

A robot may be classified for industry, medical treatment, home, and military based on its use purpose or field.

A robot includes a driving unit including an actuator or motor, and may perform various physical operations, such as moving a robot joint. Furthermore, a movable robot includes a wheel, a brake, a propeller, etc. in a driving unit, and may run on the ground or fly in the air through the driving unit.

## Self-driving (autonomous-driving)

Self-driving means a technology for autonomous driving. A self-driving vehicle means a vehicle that runs without a user manipulation or by a user's minimum manipulation.

For example, self-driving may include all of a technology for maintaining a driving lane, a technology for automatically controlling speed, such as adaptive cruise control, a technology for automatic driving along a predetermined path, a technology for automatically configuring a path when a destination is set and driving.

A vehicle includes all of a vehicle having only an internal combustion engine, a hybrid vehicle including both an internal combustion engine and an electric motor, and an electric vehicle having only an electric motor, and may include a train, a motorcycle, etc. in addition to the vehicles.

In this case, the self-driving vehicle may be considered to be a robot having a self-driving function.

## Extended reality (XR)

Extended reality collectively refers to virtual reality (VR), augmented reality (AR), and mixed reality (MR). The VR technology provides an object or background of the real world as a CG image only. The AR technology provides a virtually produced CG image on an actual thing image. The MR technology is a computer graphics technology for mixing and combining virtual objects with the real world and providing them.

The MR technology is similar to the AR technology in that it shows a real object and a virtual object. However, in the AR technology, a virtual object is used in a form to supplement a real object. In contrast, unlike in the AR technology, in the MR technology, a virtual object and a real object are used as the same character.

The XR technology may be applied to a head-mount display (HMD), a head-up display (HUD), a mobile phone, a tablet PC, a laptop, a desktop, TV, and a digital signage. A device to which the XR technology has been applied may be called an XR device.

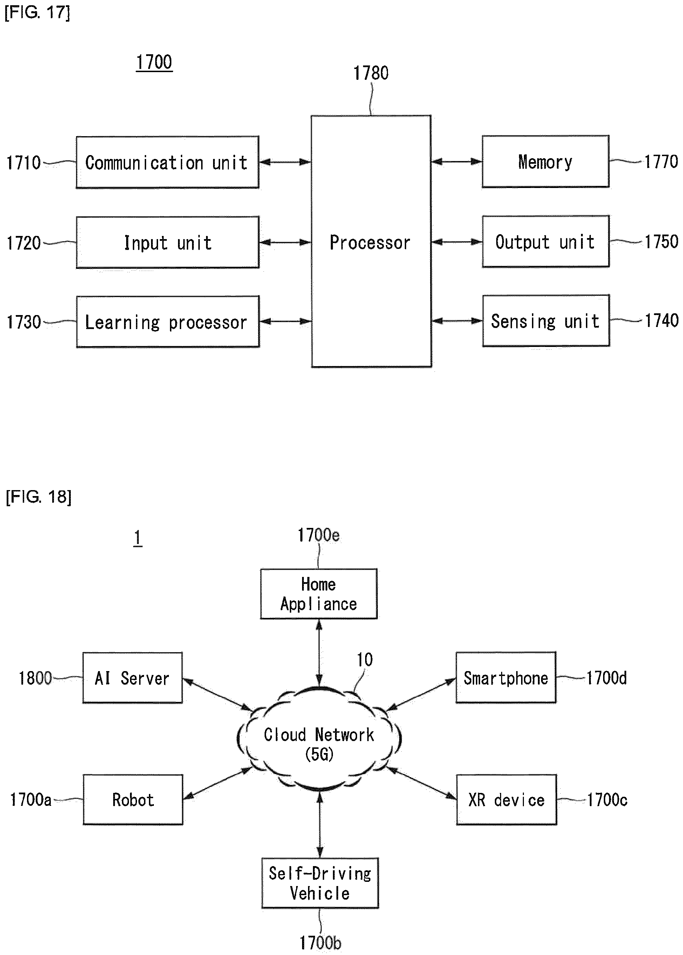

FIG. 17 is a diagram showing an example of an AI device 1700 to which implementations of this disclosure may be applied.

The AI device 1700 may be implemented as a fixed device or mobile device, such as TV, a projector, a mobile phone, a smartphone, a desktop computer, a notebook, a terminal for digital broadcasting, a personal digital assistants (PDA), a portable multimedia player (PMP), a navigator, a tablet PC, a wearable device, a set-top box (STB), a DMB receiver, a radio, a washing machine, a refrigerator, a desktop computer, a digital signage, a robot, and a vehicle.

Referring to FIG. 17, the terminal 1700 may include a communication unit 1710, an input unit 1720, a learning processor 1730, a sensing unit 1740, an output unit 1750, memory 1770 and a processor 1780.

The communication unit 1710 may transmit and receive data to and from external devices, such as other AI devices 1700a to 1700er or an AI server 1800, using wired and wireless communication technologies. For example, the communication unit 1710 may transmit and receive sensor information, a user input, a learning model, and a control signal to and from external devices.

In this case, communication technologies used by the communication unit 1710 include a global system for mobile communication (GSM), code division multi access (CDMA), long term evolution (LTE), 5G, a wireless LAN (WLAN), wireless-fidelity (Wi-Fi), Bluetooth™, radio frequency identification (RFID), infrared data association (IrDA), ZigBee, near field communication (NFC), etc.

The input unit 1720 may obtain various types of data.

In this case, the input unit 1720 may include a camera for an image signal input, a microphone for receiving an audio signal, a user input unit for receiving information from a user, etc. In this case, the camera or the microphone is treated as a sensor, and a signal obtained from the camera or the microphone may be called sensing data or sensor information.

The input unit 1720 may obtain learning data for model learning and input data to be used when an output is obtained using a learning model. The input unit 1720 may obtain not-processed input data. In this case, the processor 1780 or the learning processor 1730 may extract an input feature by performing pre-processing on the input data.

The learning processor 1730 may be trained by a model configured with an artificial neural network using learning data. In this case, the trained artificial neural network may be called a learning model. The learning model is used to deduce a result value of new input data not learning data. The deduced value may be used as a base for performing a given operation.

In this case, the learning processor 1730 may perform AI processing along with the learning processor 1840 of the AI server 1800.

In this case, the learning processor 1730 may include memory integrated or implemented in the AI device 1700. Alternatively, the learning processor 1730 may be implemented using the memory 1770, external memory directly coupled to the AI device 1700 or memory maintained in an external device.

The sensing unit 1740 may obtain at least one of internal information of the AI device 1700, surrounding environment information of the AI device 1700, or user information using various sensors.

In this case, sensors included in the sensing unit 1740 include a proximity sensor, an illumination sensor, an acceleration sensor, a magnetic sensor, a gyro sensor, an inertia sensor, an RGB sensor, an IR sensor, a fingerprint recognition sensor, an ultrasonic sensor, a photo sensor, a microphone, LIDAR, and a radar.

The output unit 1750 may generate an output related to a visual sense, an auditory sense or a tactile sense.

In this case, the output unit 1750 may include a display unit for outputting visual information, a speaker for outputting auditory information, and a haptic module for outputting tactile information.

The memory 1770 may store data supporting various functions of the AI device 1700. For example, the memory 1770 may store input data obtained by the input unit 1720, learning data, a learning model, a learning history, etc.

The processor 1780 may determine at least one executable operation of the AI device 1700 based on information, determined or generated using a data analysis algorithm or a machine learning algorithm. Furthermore, the processor 1780 may perform the determined operation by controlling elements of the AI device 1700.

To this end, the processor 1780 may request, search, receive, and use the data of the learning processor 1730 or the memory 1770, and may control elements of the AI device 1700 to execute a predicted operation or an operation determined to be preferred, among the at least one executable operation.

In this case, if association with an external device is necessary to perform the determined operation, the processor 1780 may generate a control signal for controlling the corresponding external device and transmit the generated control signal to the corresponding external device.

The processor 1780 may obtain intention information for a user input and transmit user requirements based on the obtained intention information.

In this case, the processor 1780 may obtain the intention information, corresponding to the user input, using at least one of a speech to text (STT) engine for converting a voice input into a text string or a natural language processing (NLP) engine for obtaining intention information of a natural language.

In this case, at least some of at least one of the STT engine or the NLP engine may be configured as an artificial neural network trained based on a machine learning algorithm. Furthermore, at least one of the STT engine or the NLP engine may have been trained by the learning processor 1730, may have been trained by the learning processor 1840 of the AI server 1800 or may have been trained by distributed processing thereof.

The processor 1780 may collect history information including the operation contents of the AI device 1700 or the feedback of a user for an operation, may store the history information in the memory 1770 or the learning processor 1730, or may transmit the history information to an external device, such as the AI server 1800. The collected history information may be used to update a learning model.

The processor 1780 may control at least some of the elements of the AI device 1700 in order to execute an application program stored in the memory 1770. Moreover, the processor 1780 may combine and drive two or more of the elements included in the AI device 1700 in order to execute the application program.

FIG. 18 is a diagram showing an example of the AI server 1800 to which implementations of this disclosure may be applied.

Referring to FIG. 18, the AI server 1800 may mean a device which is trained by an artificial neural network using a machine learning algorithm or which uses a trained artificial neural network. In this case, the AI server 1800 is configured with a plurality of servers and may perform distributed processing and may be defined as a 5G network. In this case, the AI server 1800 may be included as a partial configuration of the AI device 1700, and may perform at least some of AI processing.

The AI server 1800 may include a communication unit 1810, memory 1830, a learning processor 1840 and a processor 1860.

The communication unit 1810 may transmit and receive data to and from an external device, such as the AI device 1700.

The memory 1830 may include a model storage unit 1831. The model storage unit 1831 may store a model (or artificial neural network 1831a) which is being trained or has been trained through the learning processor 1840.

The learning processor 1840 may train the artificial neural network 1831a using learning data. The learning model may be used in the state in which it has been mounted on the AI server 1800 of the artificial neural network or may be mounted on an external device, such as the AI device 1700, and used.

The learning model may be implemented as hardware, software or a combination of hardware and software. If some of or the entire learning model is implemented as software, one or more instructions configuring the learning model may be stored in the memory 1830.

The processor 1860 may deduce a result value of new input data using the learning model, and may generate a response or control command based on the deduced result value.

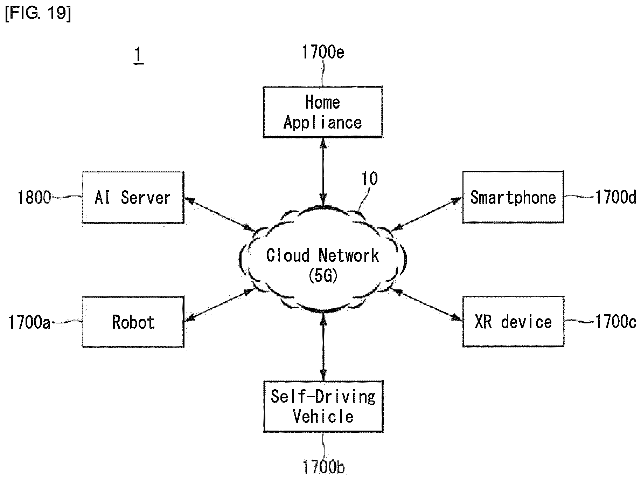

FIG. 19 is a diagram showing an example of an AI system 1 to which implementations of this disclosure may be applied.

Referring to FIG. 19, the AI system 1 is connected to at least one of the AI server 1800, a robot 1700a, a self-driving vehicle 1700b, an XR device 1700c, a smartphone 1700d or home appliances 1700e over a cloud network 10. In this case, the robot 1700a, the self-driving vehicle 1700b, the XR device 1700c, the smartphone 1700d or the home appliances 1700e to which the AI technology has been applied may be called AI devices 1700a to 1700e.

The cloud network 10 may configure part of cloud computing infra or may mean a network present within cloud computing infra. In this case, the cloud network 10 may be configured using the 3G network, the 4G or long term evolution (LTE) network or the 5G network.

That is, the devices 1700a to 1700e (1800) configuring the AI system 1 may be interconnected over the cloud network 10. Particularly, the devices 1700a to 1700e and 1800 may communicate with each other through a base station, but may directly communicate with each other without the intervention of a base station.

The AI server 1800 may include a server for performing AI processing and a server for performing calculation on big data.

The AI server 1800 is connected to at least one of the robot 1700a, the self-driving vehicle 1700b, the XR device 1700c, the smartphone 1700d or the home appliances 1700e, that is, AI devices configuring the AI system 1, over the cloud network 10, and may help at least some of the AI processing of the connected AI devices 1700a to 1700e.

In this case, the AI server 1800 may train an artificial neural network based on a machine learning algorithm in place of the AI devices 1700a to 1700e, may directly store a learning model or may transmit the learning model to the AI devices 1700a to 1700e.

In this case, the AI server 1800 may receive input data from the AI devices 1700a to 1700e, may deduce a result value of the received input data using the learning model, may generate a response or control command based on the deduced result value, and may transmit the response or control command to the AI devices 1700a to 1700e.

Alternatively, the AI devices 1700a to 1700e may directly deduce a result value of input data using a learning model, and may generate a response or control command based on the deduced result value.

Hereinafter, various implementations of the AI devices 1700a to 1700e to which the above-described technology is applied are described. In this case, the AI devices 1700a to 1700e shown in FIG. 19 may be considered to be detailed implementations of the AI device 100 shown in FIG. 17.

## AI and Robot

An AI technology is applied to the robot 1700a, and the robot 1700a may be implemented as a guidance robot, a transport robot, a cleaning robot, a wearable robot, an entertainment robot, a pet robot, an unmanned flight robot, etc.

The robot 1700a may include a robot control module for controlling an operation. The robot control module may mean a software module or a chip in which a software module has been implemented using hardware.

The robot 1700a may obtain state information of the robot 1700a, may detect (recognize) a surrounding environment and object, may generate map data, may determine a moving path and a running plan, may determine a response to a user interaction, or may determine an operation using sensor information obtained from various types of sensors.

In this case, the robot 1700a may use sensor information obtained by at least one sensor among LIDAR, a radar, and a camera in order to determine the moving path and running plan.

The robot 1700a may perform the above operations using a learning model configured with at least one artificial neural network. For example, the robot 1700a may recognize a surrounding environment and object using a learning model, and may determine an operation using recognized surrounding environment information or object information. In this case, the learning model may have been directly trained in the robot 1700a or may have been trained in an external device, such as the AI server 1800.

In this case, the robot 1700a may directly generate results using the learning model and perform an operation, but may perform an operation by transmitting sensor information to an external device, such as the AI server 1800, and receiving results generated in response thereto.

The robot 1700a may determine a moving path and running plan using at least one of map data, object information detected from sensor information, or object information obtained from an external device. The robot 1700a may run along the determined moving path and running plan by controlling the driving unit.

The map data may include object identification information for various objects disposed in the space in which the robot 1700a moves. For example, the map data may include object identification information for fixed objects, such as a wall and a door, and movable objects, such as a flowport and a desk. Furthermore, the object identification information may include a name, a type, a distance, a location, etc.

Furthermore, the robot 1700a may perform an operation or run by controlling the driving unit based on a user's control/interaction. In this case, the robot 1700a may obtain intention information of an interaction according to a user's behavior or voice speaking, may determine a response based on the obtained intention information, and may perform an operation.

**AI and self-driving**

An AI technology is applied to the self-driving vehicle 1700b, and the self-driving vehicle 1700b may be implemented as a movable type robot, a vehicle, an unmanned flight body, etc.

The self-driving vehicle 1700b may include a self-driving control module for controlling a self-driving function. The self-driving control module may mean a software module or a chip in which a software module has been implemented using hardware. The self-driving control module may be included in the self-driving vehicle 1700b as an element of the self-driving vehicle 1700b, but may be configured as separate hardware outside the self-driving vehicle 1700b and connected to the self-driving vehicle 1700b.

The self-driving vehicle 1700b may obtain state information of the self-driving vehicle 1700b, may detect (recognize) a surrounding environment and object, may generate map data, may determine a moving path and running plan, or may determine an operation using sensor information obtained from various types of sensors.

In this case, in order to determine the moving path and running plan, like the robot 1700a, the self-driving vehicle 1700b may use sensor information obtained from at least one sensor among LIDAR, a radar and a camera.

Particularly, the self-driving vehicle 1700b may recognize an environment or object in an area whose view is blocked or an area of a given distance or more by receiving sensor information for the environment or object from external devices, or may directly receive recognized information for the environment or object from external devices.

The self-driving vehicle 1700b may perform the above operations using a learning model configured with at least one artificial neural network. For example, the self-driving vehicle 1700b may recognize a surrounding environment and object using a learning model, and may determine the flow of running using recognized surrounding environment information or object information. In this case, the learning model may have been directly trained in the self-driving vehicle 1700b or may have been trained in an external device, such as the AI server 1800.

In this case, the self-driving vehicle 1700b may directly generate results using the learning model and perform an operation, but may perform an operation by transmitting sensor information to an external device, such as the AI server 1800, and receiving results generated in response thereto.

The self-driving vehicle 1700b may determine a moving path and running plan using at least one of map data, object information detected from sensor information or object information obtained from an external device. The self-driving vehicle 1700b may run based on the determined moving path and running plan by controlling the driving unit.

The map data may include object identification information for various objects disposed in the space (e.g., road) in which the self-driving vehicle 1700b runs. For example, the map data may include object identification information for fixed objects, such as a streetlight, a rock, and a building, etc., and movable objects, such as a vehicle and a pedestrian. Furthermore, the object identification information may include a name, a type, a distance, a location, etc.

Furthermore, the self-driving vehicle 1700b may perform an operation or may run by controlling the driving unit based on a user's control/interaction. In this case, the self-driving vehicle 1700b may obtain intention information of an interaction according to a user' behavior or voice speaking, may determine a response based on the obtained intention information, and may perform an operation.

**AI and XR**

An AI technology is applied to the XR device 1700c, and the XR device 1700c may be implemented as a head-mount display, a head-up display provided in a vehicle, television, a mobile phone, a smartphone, a computer, a wearable device, home appliances, a digital signage, a vehicle, a fixed type robot or a movable type robot.

The XR device 1700c may generate location data and attributes data for three-dimensional points by analyzing three-dimensional point cloud data or image data obtained through various sensors or from an external device, may obtain information on a surrounding space or real object based on the generated location data and attributes data, and may output an XR object by rendering the XR object. For example, the XR device 1700c may output an XR object, including additional information for a recognized object, by making the XR object correspond to the corresponding recognized object.

The XR device 1700c may perform the above operations using a learning model configured with at least one artificial neural network. For example, the XR device 1700c may recognize a real object in three-dimensional point cloud data or image data using a learning model, and may provide information corresponding to the recognized real object. In this case, the learning model may have been directly trained in the XR device 1700c or may have been trained in an external device, such as the AI server 1800.

In this case, the XR device 1700c may directly generate results using a learning model and perform an operation, but may perform an operation by transmitting sensor information to an external device, such as the AI server 1800, and receiving results generated in response thereto.

**AI, robot, and self-driving**

An AI technology and a self-driving technology are applied to the robot 1700a, and the robot 1700a may be implemented as a guidance robot, a transport robot, a cleaning robot, a wearable robot, an entertainment robot, a pet robot, an unmanned flight robot, etc.

The robot 1700a to which the AI technology and the self-driving technology have been applied may mean a robot itself having a self-driving function or may mean the robot 1700a interacting with the self-driving vehicle 1700b.

The robot 1700a having the self-driving function may collectively refer to devices that autonomously move along a given flow without control of a user or autonomously determine a flow and move.

The robot 1700a and the self-driving vehicle 1700b having the self-driving function may use a common sensing method in order to determine one or more of a moving path or a running plan. For example, the robot 1700a and the self-driving vehicle 1700b having the self-driving function may determine one or more of a moving path or a running plan using information sensed through LIDAR, a radar, a camera, etc.

The robot 1700a interacting with the self-driving vehicle 1700b is present separately from the self-driving vehicle 1700b, and may perform an operation associated with a self-driving function inside or outside the self-driving vehicle 1700b or associated with a user got in the self-driving vehicle 1700b.

In this case, the robot 1700a interacting with the self-driving vehicle 1700b may control or assist the self-driving function of the self-driving vehicle 1700b by obtaining sensor information in place of the self-driving vehicle 1700b and providing the sensor information to the self-driving vehicle 1700b, or by obtaining sensor information, generating surrounding environment information or object information, and providing the surrounding environment information or object information to the self-driving vehicle 1700b.

Alternatively, the robot 1700a interacting with the self-driving vehicle 1700b may control the function of the self-driving vehicle 1700b by monitoring a user got in the self-driving vehicle 1700b or through an interaction with a user. For example, if a driver is determined to be a drowsiness state, the robot 1700a may activate the self-driving function of the self-driving vehicle 1700b or assist control of the driving unit of the self-driving vehicle 1700b. In this case, the function of the self-driving vehicle 1700b controlled by the robot 1700a may include a function provided by a navigation system or audio system provided within the self-driving vehicle 1700b, in addition to a self-driving function simply.

Alternatively, the robot 1700a interacting with the self-driving vehicle 1700b may provide information to the self-driving vehicle 1700b or may assist a function outside the self-driving vehicle 1700b. For example, the robot 1700a may provide the self-driving vehicle 1700b with traffic information, including signal information, as in a smart traffic light, and may automatically connect an electric charger to a filling inlet through an interaction with the self-driving vehicle 1700b as in the automatic electric charger of an electric vehicle.

**AI, robot, and XR**

An AI technology and an XR technology are applied to the robot 1700a, and the robot 1700a may be implemented as a guidance robot, a transport robot, a cleaning robot, a wearable robot, an entertainment robot, a pet robot, an unmanned flight robot, a drone, etc.

The robot 1700a to which the XR technology has been applied may mean a robot, that is, a target of control/interaction within an XR image. In this case, the robot 1700a is different from the XR device 1700c, and they may operate in conjunction with each other.

When the robot 1700a, that is, a target of control/interaction within an XR image, obtains sensor information from sensors including a camera, the robot 1700a or the XR device 1700c may generate an XR image based on the sensor information, and the XR device 1700c may output the generated XR image. Furthermore, the robot 1700a may operate based on a control signal received through the XR device 1700c or a user's interaction.

For example, a user may identify a corresponding XR image at timing of the robot 1700a, remotely operating in conjunction through an external device, such as the XR device 1700c, may adjust the self-driving path of the robot 1700a through an interaction, may control an operation or driving, or may identify information of a surrounding object.

**AI, self-driving, and XR**

An AI technology and an XR technology are applied to the self-driving vehicle 1700b, and the self-driving vehicle 1700b may be implemented as a movable type robot, a vehicle, an unmanned flight body, etc.

The self-driving vehicle 1700b to which the XR technology has been applied may mean a self-driving vehicle equipped with means for providing an XR image or a self-driving vehicle, that is, a target of control/interaction within an XR image. Particularly, the self-driving vehicle 1700b, that is, a target of control/interaction within an XR image, is different from the XR device 1700c, and they may operate in conjunction with each other.

The self-driving vehicle 1700b equipped with the means for providing an XR image may obtain sensor information from sensors including a camera, and may output an XR image generated based on the obtained sensor information. For example, the self-driving vehicle 1700b includes an HUD, and may provide a passenger with an XR object corresponding to a real object or an object within a screen by outputting an XR image.

In this case, when the XR object is output to the HUD, at least some of the XR object may be output with it overlapping a real object toward which a passenger's view is directed. In contrast, when the XR object is displayed on a display included within the self-driving vehicle 1700b, at least some of the XR object may be output so that it overlaps an object within a screen. For example, the self-driving vehicle 1700b may output XR objects corresponding to objects, such as a carriageway, another vehicle, a traffic light, a signpost, a two-wheeled vehicle, a pedestrian, and a building.

When the self-driving vehicle 1700b, that is, a target of control/interaction within an XR image, obtains sensor information from sensors including a camera, the self-driving vehicle 1700b or the XR device 1700c may generate an XR image based on the sensor information. The XR device 1700c may output the generated XR image. Furthermore, the self-driving vehicle 1700b may operate based on a control signal received through an external device, such as the XR device 1700c, or a user's interaction.

## Interpretation of the disclosure

The implementations described above are implemented by combinations of components and features of the present disclosure in predetermined forms. Each component or feature should be considered selectively unless specified separately. Each component or feature may be carried out without being combined with another component or feature. Moreover, some components and/or features are combined with each other and can implement implementations of the present disclosure. The order of operations described in implementations of the present disclosure may be changed. Some components or features of one implementation may be included in another implementation, or may be replaced by corresponding components or features of another implementation. It will be apparent that some claims referring to specific claims may be combined with another claims referring to the other claims other than the specific claims to constitute the implementation or add new claims by means of amendment after the application is filed.

Implementations of the present disclosure can be implemented by various means, for example, hardware, firmware, software, or combinations thereof. When implementations are implemented by hardware, one implementation of the present disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When implementations are implemented by firmware or software, one implementation of the present disclosure can be implemented by modules, procedures, functions, etc. performing functions or operations described above. Software code can be stored in a memory and can be driven by a processor. The memory is provided inside or outside the processor and can exchange data with the processor by various well-known means.

While the present disclosure has been described and illustrated herein with reference to the preferred implementations thereof, it will be apparent to those skilled in the art that various modifications and variations can be made therein without departing from the spirit and scope of the present disclosure. Thus, it is intended that the present disclosure covers the modifications and variations of this disclosure that come within the scope of the appended claims and their equivalents.

[Industrial applicability]

The present disclosure has been illustrated as being applied to the 3GPP LTE/LTE-A/NR system, but may be applied to various wireless communication systems in addition to the 3GPP LTE/LTE-A/NR system.

## Claims

1. A method for transmitting, by a user equipment (UE), uplink control information (UCI) in a wireless communication system, the method comprising:

   receiving a radio resource control (RRC) configuration from a base station; and
   multiplexing at least one uplink control information among a plurality of uplink control information through a specific resource among a plurality of resources allocated for transmission of control information or data and transmitting the multiplexed uplink control information to the base station,
   wherein the specific resource is a resource allocated for transmission control information or data related to a service requiring a low latency.

2. The method of claim 1, wherein the at least one uplink control information is control information related to services having different requirements, respectively and different resources are allocated to the uplink control information, respectively.

3. The method of claim 2, wherein at least one of locations on a time axis and locations on a frequency axis of the different resources is partially or entirely overlapped.

4. The method of claim 1, wherein the radio resource control configuration is configuration information related to the service requiring the low latency, and
wherein the at least one uplink control information is multiplexed based on parameters included in the radio resource control configuration.

5. The method of claim 1, wherein the at least one control information is selected according to a priority of the plurality of uplink control information.

6. The method of claim 5, wherein the priority is determined according to requirements of the respective services related to the plurality of uplink control information except for channel status information (CSI).

7. The method of claim 6, wherein the plurality of uplink control information includes a Hybrid Automatic Repeat and reQuest Acknowledgement (HARQ-ACK) and a scheduling request (RS) for each of the services, and the HARQ-ACK for each service has a higher priority than the scheduling request for the same service.

8. The method of claim 1, wherein among the plurality of uplink control information, the remaining uplink control information other than the at least one uplink control information is dropped.

9. The method of claim 1, further comprising:

wherein the at least one uplink control information among the plurality of uplink control information is the control information related to the service requiring the low latency,
multiplexing the remaining uplink control information other than the at least one uplink control information among the plurality of uplink control information through other resources allocated for services related to the remaining uplink control information, respectively and transmitting the multiplexed uplink control information to the base station.

10. The method of claim 1, wherein the plurality of resources are plurality of physical uplink control channels (PUCCHs) for transmission of the control information, and
wherein the specific resource is a PUCCH having a shortest length among the plurality of physical uplink control channels (PUCCHs).

11. A method for receiving, by a base station, uplink control information (UCI) in a wireless communication system, the method comprising:

transmitting a radio resource control (RRC) configuration to a UE; and
receiving, from the UE, at least one uplink control information among a plurality of uplink control information multiplexed through a specific resource among a plurality of resources allocated to the UE for transmission of control information or data,
wherein the specific resource is a resource allocated for transmission control information or data related to a service requiring a low latency.

12. A UE transmitting uplink control information (UCI) to a base station in a wireless communication system, the UE comprising:

a transceiver receiving a radio resource control (RRC) configuration from the base station; and
a processor controlling the transceiver to multiplex at least one uplink control information among a plurality of uplink control information through a specific resource among a plurality of resources allocated for transmission of control information or data and transmit the multiplexed uplink control information to the base station,
wherein the specific resource is a resource allocated for transmission control information or data related to a service requiring a low latency.

13. The UE of claim 12, wherein the at least one uplink control information is control information related to services having different requirements, respectively and different resources are allocated to the uplink control information, respectively.

14. The UE of claim 13, wherein at least one of locations on a time axis and locations on a frequency axis of the different resources is partially or entirely overlapped.

15. The UE of claim 12, wherein the radio resource control configuration is configuration information related to the service requiring the low latency, and
wherein the processor multiplexes the at least one uplink control information based on parameters included in the radio resource control configuration.

16. The UE of claim 12, wherein the processor selects the at least one control information according to a priority of the plurality of uplink control information.

17. The UE of claim 16, wherein the processor determines the priority according to requirements of the respective services related to the plurality of uplink control information except for channel status information (CSI).

18. The UE of claim 17, wherein the plurality of uplink control information includes a Hybrid Automatic Repeat and reQuest Acknowledgement (HARQ-ACK) and a scheduling request (RS), and
wherein the HARQ-ACK for each service has a higher priority than the scheduling request for the same service.

19. The UE of claim 12, wherein the processor drops the remaining uplink control information other than the at least one uplink control information among the plurality of uplink control information.

20. The UE of claim 12, wherein the at least one uplink control information among the plurality of uplink control information is the control information related to the service requiring the low latency, and
the processor multiplexes the remaining uplink control information other than the at least one uplink control information among the plurality of uplink control information through other resources allocated for services related to the remaining uplink control information, respectively and transmits the multiplexed uplink control information to the base station.

[FIG. 1]

[FIG. 2]

[FIG. 3]

[FIG. 4]

[FIG. 5]

[FIG. 6]

UE                                                                          GNB

                                                                    S610
              DownlinkPreemption IE

                                                                    S620
              DCI format 2_1

S630

┌──────────────────────────────────────┐
│        NOT RECEIVED BY RESOURCE        │
│  INDICTED BY PRE-EMPTION INDICATION    │
└──────────────────────────────────────┘

[FIG. 7]

■ eMBB DL transmission

▨ URLLC DL transmission

▨ Pre-emption indication

[FIG. 8]

RECEIVE RADIO RESOURCE CONTROL
CONFIGURATION FROM GNB ——— S810

ALLOCATE AT LEAST ONE UPLINK
CONTROL INFORMATION TO
DIFFERENT RADIO RESOURCES ——— S820

S840

TRANSMIT AT LEAST ONE
UPLINK CONTROL INFORMATION
THROUGH ALLOCATED
RADIO RESOURCE

NO ← DO AT LEAST
SOME OF DIFFERENT
RADIO RESOURCES OVERLAP
ON TIME AXIS OR
FREQUENCY AXIS? ——— S830

YES

MULTIPLEX AT LEAST ONE UPLINK
CONTROL INFORMATION THROUGH RADIO
RESOURCE ALLOCATED FOR LOW-LATENCY
REQUEST SERVICE AND TRANSMIT
MULTIPLEXED CONTROL INFORMATION ——— S850

[FIG. 9]

```
┌─────────────────────────────┐
│  RECEIVE RADIO RESOURCE      │
│  CONTROL                     │──── S910
│  CONFIGURATION FROM GNB      │
└─────────────────────────────┘
              │
              ▼
┌─────────────────────────────┐
│  ALLOCATE PLURALITY OF       │
│  CONTROL INFORMATION OR      │
│  DATA RELATED TO             │──── S920
│  DIFFERENT SERVICES TO       │
│  DIFFERENT RADIO RESOURCES   │
└─────────────────────────────┘
              │
              ▼
```

S950

┌──────────────────────────┐                  ╱◇╲
│  TRANSMIT PLURALITY OF    │        NO       ╱ DO AT LEAST      ╲
│  CONTROL INFORMATION OR   │◄───────────────╱ SOME OF DIFFERENT  ╲
│  DATA THROUGH A           │                ╲ RADIO RESOURCES     ╱──── S930
│  PREALLOCATED             │                 ╲ OVERLAP ON TIME   ╱
│  RADIO RESOURCE           │                  ╲ AXIS OR FREQUENCY╱
└──────────────────────────┘                   ╲  AXIS?          ╱
                                                 ╲◇╱
                                                  │
                                                 YES
                                                  │
                                                  ▼
                              ┌─────────────────────────────────────┐
                              │  TRANSMIT CONTROL INFORMATION OR     │
                              │  DATA RELATED TO FIRST SERVICE       │
                              │  HAVING FIRST REQUIREMENT CONFIGURED │──── S940
                              │  AS REQUIREMENT HAVING HIGHEST       │
                              │  PRIORITY AMONG DIFFERENT SERVICES   │
                              └─────────────────────────────────────┘

[FIG. 10]

S1010

RECEIVE RADIO RESOURCE CONTROL
CONFIGURATION AND DOWNLINK
CONTROL INFORMATION FROM GNB

S1020

ALLOCATE FIRST CONTROL INFORMATION
OR FIRST DATA RELATED TO FIRST
SERVICE HAVING LOW-LATENCY
REQUIREMENT TO PLURALITY OF FIRST
RADIO RESOURCES FOR FIRST SERVICE

S1030

ALLOCATE SECOND CONTROL INFORMATION
OR SECOND DATA RELATED TO SECOND
SERVICE TO PLURALITY OF SECOND RADIO
RESOURCES FOR SECOND SERVICE

S1040

DO AT LEAST SOME
OF FIRST AND SECOND RADIO
RESOURCES OVERLAP ON TIME
AXIS OR FREQUENCY
AXIS?

YES                                    NO

S1051                                  S1052

DROP SECOND CONTROL
INFORMATION OR SECOND DATA

TRANSMIT FIRST AND SECOND
CONTROL INFORMATION OR
DATA THROUGH ALLOCATE RADIO
RESOURCES, RESPECTIVELY

S1061

TRANSMIT FIRST CONTROL
INFORMATION OR FIRST DATA
THROUGH FIRST RADIO RESOURCE

[FIG. 11]

RECEIVE RADIO RESOURCE
CONTROL CONFIGURATION FROM GNB — S1110

ALLOCATE CONTROL INFORMATION OR
DATA RELATED TO LOW-LATENCY
REQUEST SERVICE TO PLURALITY OF — S1120
PUCCHS OR PUSCHS FOR
LOW-LATENCY REQUEST SERVICE

S1150

TRANSMIT CONTROL INFORMATION
OR DATA THROUGH ALLOCATED
PUCCH OR PUSCH, RESPECTIVELY

NO

DO AT LEAST
SOME OF PLURALITY OF
PUCCHS OR PLURALITY OF — S1130
PUSCHS OVERLAP ON TIME
AXIS OR FREQUENCY
AXIS?

YES

TRANSMIT CONTROL INFORMATION OR
DATA RELATED TO LOW-LATENCY
REQUEST SERVICE THROUGH — S1140
SHORTEST PUCCH OR PUSCH

[FIG. 12]

RECEIVE RADIO RESOURCE CONTROL
CONFIGURATION FROM GNB ── S1210

ALLOCATE FIRST CONTROL INFORMATION
RELATED TO FIRST SERVICE OF FIRST
REQUIREMENT AND SECOND CONTROL
INFORMATION RELATED TO SECOND SERVICE
OF SECOND REQUIREMENT WHICH TAKES
PRECEDENCE OVER FIRST REQUIREMENT
TO DIFFERENT RADIO RESOURCES ── S1220

S1250

TRANSMIT FIRST AND
SECOND CONTROL INFORMATION
THROUGH ALLOCATED RADIO
RESOURCES, RESPECTIVELY

NO ◄── DO AT LEAST SOME
OF DIFFERENT RADIO RESOURCES
OVERLAP ON TIME AXIS OR
FREQUENCY AXIS? ── S1230

YES

TRANSMIT HARQ-ACK OF SECOND SERVICE ── S1241

TRANSMIT SR OF SECOND SERVICE ── S1242

TRANSMIT HARQ-ACK OF FIRST SERVICE ── S1243

TRANSMIT SR OF FIRST SERVICE ── S1244

TRANSMIT CSI TYPE 1 OF SECOND SERVICE ── S1245

TRANSMIT CSI TYPE 1 OF FIRST SERVICE ── S1246

TRANSMIT CSI TYPE 2 OF SECOND SERVICE ── S1247

TRANSMIT CIS TYPE 2 OF FIRST SERVICE ── S1248

[FIG. 13]

[FIG. 14]

| TRANSMIT RADIO RESOURCE CONTROL CONFIGURATION TO UE | ~S1410 |

| RECEIVE AT LEAST ONE UPLINK CONTROL INFORMATION ALLOCATED TO DIFFERENT RADIO RESOURCES OF WHICH AT LEAST SOME OVERLAP THROUGH RADIO RESOURCE FOR LOW-LATENCY REQUEST SERVICE | ~S1420 |

[FIG. 15]

1514                                                    1524

1511    1510    1513          1521    1520    1523

FIRST DEVICE          SECOND DEVICE

PROCESSOR  TRANSCEIVER    PROCESSOR  TRANSCEIVER

MEMORY                MEMORY

1512                  1522

[FIG. 16]

[FIG. 17]

[FIG. 18]

[FIG. 19]

## INTERNATIONAL SEARCH REPORT

| | International application No. |
|---|---|
| | **PCT/KR2019/005756** |

**A.    CLASSIFICATION OF SUBJECT MATTER**

*H04W 72/12(2009.01)i, H04W 72/04(2009.01)i, H04L 5/00(2006.01)i*

According to International Patent Classification (IPC) or to both national classification and IPC

**B.    FIELDS SEARCHED**

Minimum documentation searched (classification system followed by classification symbols)
H04W 72/12; H04L 1/00; H04L 5/00; H04W 72/04

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: uplink control information(UCI), radio resource control configuration (RRC configuration), low-latency service, channel status information(CSI)

**C.    DOCUMENTS CONSIDERED TO BE RELEVANT**

| Category* | Citation of document, with indication, where appropriate, of the relevant passages | Relevant to claim No. |
|---|---|---|
| Y | VIVO. Remaining issues on UCI multiplexing. R1-1801537. 3GPP TSG RAN WG1 Meeting #92. Athens, Greece. 15 February 2018 See sections 1-2. | 1-20 |
| Y | INSTITUTE FOR INFORMATION INDUSTRY (III). On eMBB and URLLC Uplink Multiplexing. R1-1802245. 3GPP TSG RAN WG1 Meeting #92. Athens, Greece. 14 February 2018 See section 2.1. | 1-20 |
| Y | CATT. Multiplexing of UCI transmissions of different durations or configurations. R1-1801731. 3GPP TSG RAN WG1 Meeting #92. Athens, Greece. 17 February 2018 See sections 2.1, 3. | 3,14 |
| A | WO 2018-004320 A1 (LG ELECTRONICS INC.) 04 January 2018 See paragraphs [0120]-[0121]; and figure 8. | 1-20 |
| A | WO 2017-209585 A1 (LG ELECTRONICS INC.) 07 December 2017 See paragraphs [0101]-[0137]; and figure 9. | 1-20 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 SEPTEMBER 2019 (17.09.2019) | **17 SEPTEMBER 2019 (17.09.2019)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/005756**

| Patent document cited in search report | Publication date | Patent family member | Publication date |
|---|---|---|---|
| WO 2018-004320 A1 | 04/01/2018 | US 2019-0165882 A1 | 30/05/2019 |
| WO 2017-209585 A1 | 07/12/2017 | None | |

Form PCT/ISA/210 (patent family annex) (January 2015)